# EUROPEAN PATENT SPECIFICATION

(11) **EP 2 210 364 B1**
(45) Date of publication and mention of the grant of the patent: **12.07.2017**
(21) Application number: 08850243.0
(22) Date of filing: 17.11.2008
(51) Int. Cl.: H04L 9/32, H04L 9/08, H04W 12/04, H04L 29/06, H04W 4/06

(54) **SYSTEM AND METHOD FOR ACQUIRING TERMINAL BINDING KEY**
VORRICHTUNGEN UND VERFAHREN ZUM ERFASSEN EINES ENDGERÄTEBINDUNGSSCHLÜSSELS
APPAREILS ET PROCÉDÉS D'ACQUISITION D'UNE CLÉ DE LIAISON DE TERMINAUX

(30) Priority: 16.11.2007 KR 20070117457; 16.11.2007 KR 20070117464
(43) Date of publication of application: 28.07.2010
(73) Proprietor: Samsung Electronics Co., Ltd., Suwon-si, Gyeonggi-do, 443-742 (KR)
(72) Inventor: LEE, Byung-Rae c/o Samsung Electronics Co.Ltd., Suwon-si, Gyeonggi-do (KR); JUNG, Bo-sun c/o Samsung Electronics Co.Ltd., Suwon-si, Gyeonggi-do (KR); HWANG, Sung-Oh c/o Samsung Electronics Co.Ltd., Suwon-si, Gyeonggi-do (KR); LEE, KOOK-Heui c/o Samsung Electronics Co.Ltd., Suwon-si, Gyeonggi-do (KR)
(74) Representative: Nederlandsch Octrooibureau
(86) International application number: PCT/KR2008/006758
(87) International publication number: WO 2009/064145

(56) References cited:
- JP-A- 2004 312 517
- JP-A- 2006 301 887
- JP-A- 2007 158 420
- US-A1- 2007 177 550
- "Service and Content Protection for Mobile Broadcast Services ; OMA-TS-BCAST_SvcCntProtection-V1_0-2007110 7-D", OMA-TS-BCAST_SVCCNTPROTECTION-V1_0-2007110 7-D, OPEN MOBILE ALLIANCE (OMA), 4330 LA JOLLA VILLAGE DR., SUITE 110 SAN DIEGO, CA 92122 ; USA , no. 1.0 7 November 2007 (2007-11-07), pages 1-237, XP064032131, Retrieved from the Internet: URL:http://member.openmobilealliance.org/f tp/Public_documents/BCAST/Permanent_docume nts/ [retrieved on 2007-11-07]
- "Service Guide for Mobile Broadcast Services ; OMA-TS-BCAST_Service_Guide-V1_0-20070925-C ", OMA-TS-BCAST_SERVICE_GUIDE-V1_0-20070925-C , OPEN MOBILE ALLIANCE (OMA), 4330 LA JOLLA VILLAGE DR., SUITE 110 SAN DIEGO, CA 92122 ; USA , no. 1.0 25 September 2007 (2007-09-25), pages 1-203, XP064032125, Retrieved from the Internet: URL:http://member.openmobilealliance.org/f tp/Public_documents/BCAST/Permanent_docume nts/ [retrieved on 2007-09-26]
- "Mobile Broadcast Services ; OMA-TS-BCAST_Services-V1_0-20070427-D", OMA-TS-BCAST_SERVICES-V1_0-20070427-D, OPEN MOBILE ALLIANCE (OMA), 4330 LA JOLLA VILLAGE DR., SUITE 110 SAN DIEGO, CA 92122 ; USA , no. 1.0 27 April 2007 (2007-04-27), pages 1-148, XP064121175, Retrieved from the Internet: URL:http://member.openmobilealliance.org/f tp/Public_documents/BCAST/Permanent_docume nts/ [retrieved on 2007-04-27]

## Description

### BACKGROUND OF THE INVENTION

### 1. Field of the Invention

The present invention relates generally to a mobile communication system, and in particular, to a system and method for acquiring a Terminal Binding Key (TBK) by a terminal in a mobile communication system.

### 2. Description of the Related Art

Smartcard Profile of Open Mobile Alliance (OMA) Broadcast version 1.0 (BCAST v1.0) standard, which is a Mobile Broadcast (BCAST) technology for a mobile communication system, uses Digital Rights Management (DRM)-related information so that broadcast services and contents can be used in security terminals using a smartcard. Use of the smartcard enables Rights Portability. The term 'Rights Portability' as used herein means a function of storing the DRM-related information in a smartcard such as Universal Subscribe Identity Module (USIM) card and User Identity Module (UIM) card, thereby making it possible for multiple terminals to play back the broadcast contents to which the user has previously subscribed. That is, the Rights Portability function allows several terminals to utilize broadcast services and contents subscribed by the user, using the DRM-related information such as Terminal Binding Key (TBK), stored in the smartcard.

Aspects of the OMA 1.0 standard are described in the documents "Service and Content Protection for Mobile Broadcast Services", "Service Guide for Mobile Broadcast Services", and "Mobile Broadcast Services" published by the OMA and available via the OMA website.

A description will now be made of a method in which a security terminal uses broadcast services and contents using the TBK in the DRM-related information.

The TBK, an encryption key that a terminal is issued after it has successfully achieved an authentication process with a BCAST Subscription Management (BSM), is used for encrypting a Traffic Encryption Key (TEK). The TEK is an encryption key used for encrypting broadcast services and contents (hereinafter, 'services' for short). Therefore, only the terminal having the TBK can decrypt the TEK, and decrypt the encrypted services from the decrypted TEK, thus playing back the services.

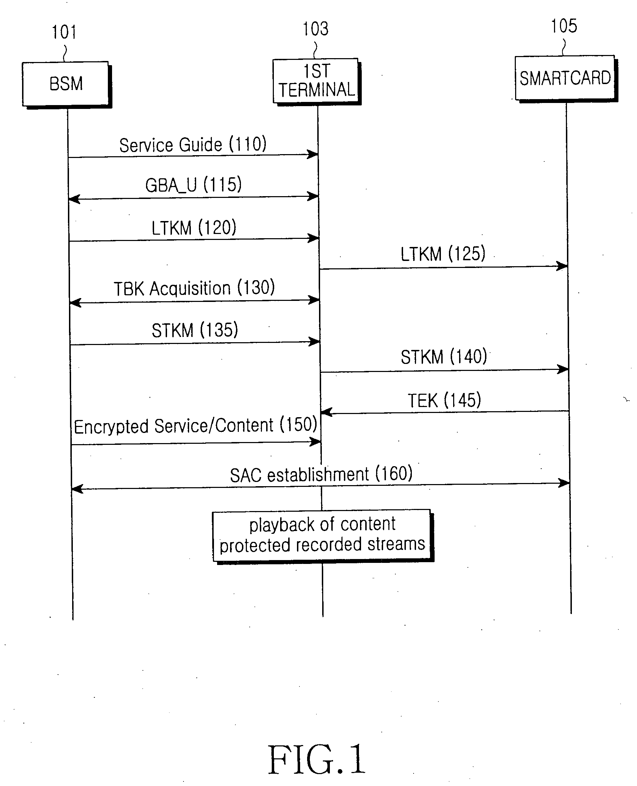

With reference to FIG. 1, a description will now be made of a method in which the currently available terminal (hereinafter, 'first terminal') performs an authentication process with a BSM in order to be issued the above-stated TBK using a smartcard, thus to receive services.

FIG. 1 is a diagram illustrating a method in which the conventional terminal performs an authentication process with a BSM to receive services.

Referring to FIG. 1, in step 110, a first terminal 103 receives a service guide including service-related information and parameters from a BSM 101 that manages subscriber's subscription information for reception of BCAST services. In step 115, the first terminal 103 performs GBA_U through an interactive connection with the BSM 101. The GBA_U is an authentication technique between a terminal and a smartcard, defined in 3GPP TS 33.220. Thereafter, in step 120, the first terminal 103 acquires from the BSM 101 a Long-Term Key Message (LTKM) in which Service Encryption Key (SEK)/Service Authentication Key (SAK) or Program Encryption Key (PEK)/Program Authentication Key (PAK) are included. In step 125, the first terminal 103 sends the acquired LTKM to a smartcard 105.

In step 130, the first terminal 103 acquires a TBK through an interactive connection with the BSM 101. That is, the BSM 101 and the first terminal 103 establish an authentication and security channel through a Secure Hypertext Transfer Protocol (HTTPS). Further, the first terminal 103 sends a first terminal's identifier BCAST_Client_ID to the BSM 101 through the channel. After receiving the BCAST_Client_ID, the BSM 101 performs terminal security verification based on the BCAST_Client_ID, and issues a TBK according to the verification result. The BSM 101 sends the issued TBK to the first terminal 103 through the channel. Thus, the first terminal 103 can acquire a TBK.

In step 135, the BSM 101 generates a Short-Term Key Message (STKM) completed by digital-signing a STKM composed of other parameters including the encrypted TEK, using the SAK, and sends the generated STKM to the first terminal 103. In step 140, the first terminal 103 sends the received STKM to the smartcard 105. In step 145, the smartcard 105 detects a TEK from the received SKTM, and sends the detected TEK to the first terminal 103. In step 150, the first terminal 103 can receive the encrypted services and contents transmitted from the BSM 101, using the TEK.

Since the TEK extracted in step 145 was encrypted by the TBK, TBK decryption is achieved only in the authenticated terminal that has been having the TBK.

Since the BSM 101 sends the determined TBK to the first terminal 103 as described above, a new terminal (hereinafter, 'second terminal') that the user has newly gotten, cannot play back the services to which the user has previously subscribed. Therefore, the second terminal should perform a process of subscribing again to the previously subscribed services.

Therefore, there is a need for a scheme in which when a user replaces a first terminal with a second terminal, the second terminal can also acquire the TBK that the first terminal could acquire, in order to play back the previously subscribed services.

### SUMMARY OF THE INVENTION

The invention is defined in the independent claims 1, 3, 7, 10, 12, 16, 19, 21, 25, 28, 30 and 34.

An aspect of the present invention is to address at least the problems and/or disadvantages and to provide at least the advantages described below. Accordingly, the present invention provides a system and method for acquiring a TBK using TBK-related information so that a new terminal can play back previously subscribed services in a mobile communication system.

According to one aspect of the present invention, there is provided a system for acquiring a Terminal Binding Key (TBK) in a mobile communication system. The TBK acquisition system includes a first terminal for subscribing to at least one service using a service guide in which information necessary for reception of each service is stored, and sending the service guide and an identifier (ID) of the subscribed service to a smartcard; the smartcard for storing the service guide and the ID of the subscribed service, and sending the service guide and the ID of the subscribed service to a second terminal through a response message to a request message used for acquiring TBK information, received from the second terminal; and the second terminal for receiving the response message by sending the request message to the smartcard, acquiring TBK information corresponding to a service that the second terminal intends to play back, from the service guide depending on the subscribed service's ID included in the response message, and acquiring the TBK by performing an authentication process using the TBK information.

According to another aspect of the present invention, there is provided a system for acquiring a Terminal Binding Key (TBK) in a mobile communication system. The TBK acquisition system includes a first terminal for subscribing to at least one service using a service guide in which information necessary for reception of each service is stored, and sending TBK-related information used for encrypting an encryption key of the subscribed service, to a smartcard; the smartcard for storing the TBK-related information, and outputting the TBK-related information through a response message to a request message used for acquiring the TBK-related information, received from the second terminal; and the second terminal for receiving the response message from the smartcard by sending the request message to the smartcard, acquiring TBK-related information corresponding to a service that the second terminal intends to play back, depending on the response message, and acquiring the TBK by performing an authentication process using the TBK-related information,.

According to further another aspect of the present invention, there is provided a method for acquiring a Terminal Binding Key (TBK) in a mobile communication system. The TBK acquisition method includes subscribing, by a the first terminal, to at least one service using a service guide in which information necessary for reception of each service is stored, and sending the service guide and an identifier (ID) of the subscribed service to a smartcard; storing, by the smartcard, the service guide and the ID of the subscribed service; sending, by a second terminal, a request message for acquiring TBK information to the smartcard; sending, by the smartcard, the stored service guide and ID of the subscribed service to the second terminal through a response message to the request message; and receiving, by the second terminal, the response message, acquiring TBK information corresponding to a service that the second terminal intends to play back, from the service guide depending on the ID of the subscribed service, included in the response message, and acquiring the TBK by performing an authentication process using the acquired TBK information,.

According to yet another aspect of the present invention, there is provided a method for acquiring a Terminal Binding Key (TBK) in a mobile communication system. The TBK acquisition method includes subscribing, by a the first terminal, to at least one service using a service guide in which information necessary for reception of each service is stored, and sending TBK-related information used for encrypting an encryption key of the subscribed service, to a smartcard; storing, by the smartcard, the TBK-related information; sending, by a second terminal, a request message for acquiring the TBK-related information to the smartcard; sending, by the smartcard, the stored TBK-related information to the second terminal through a response message to the request message; and receiving, by the second terminal, the response message, acquiring TBK-related information corresponding to a service that the second terminal intends to play back, depending on the response message, and acquiring the TBK by performing an authentication process using the TBK-related information.

According to still another aspect of the present invention, there is provided a system for acquiring a Terminal Binding Key (TBK) in a mobile communication system. The TBK acquisition system includes a first terminal for receiving a service guide, in which information necessary for reception of each service is stored, from a BCAST Service Distribution/Adaptation (BSD/A), subscribing to at least one service using the service guide, and sending acquisition information for acquiring the service guide and an identifier (ID) of the subscribed service, to a smartcard; the smartcard for storing the acquisition information and the ID of the subscribed service, sending the acquisition information to a second terminal through a response message to a first request message for acquiring the acquisition information, received from the second terminal, and sending the ID of the subscribed service to the second terminal through a response message to a second request message for acquiring the ID of the subscribed service, received from the second terminal; and the second terminal for receiving a service guide based on the acquisition information from the BSD/A by sending a third request message for requesting the service guide based on the acquisition information to the BSD/A, receiving an ID of the subscribed service by sending the second request message to the smartcard, acquiring TBK information necessary for TBK acquisition using the ID of the subscribed service from the service guide based on the acquisition information, and acquiring a TBK by performing an authentication process using the TBK information.

According to still another aspect of the present invention, there is provided a method for acquiring a Terminal Binding Key (TBK) in a mobile communication system. The TBK acquisition method includes receiving, by a first terminal, a service guide, in which information necessary for reception of each service is stored, from a BCAST Service Distribution/Adaptation (BSD/A), subscribing to at least one service using the service guide, and sending acquisition information for acquiring the service guide and an identifier (ID) of the subscribed service, to a smartcard; storing, by the smartcard, the acquisition information and the ID of the subscribed service; sending, by a second terminal, a third request message for requesting a service guide based on the acquisition information, to the BSD/A, and receiving a service guide based on the acquisition information from the BSD/A; receiving, by the second terminal, the ID of the subscribed service from the smartcard by sending a second request message for acquiring the ID of the subscribed service to the smartcard; and acquiring, by the second terminal, TBK information necessary for TBK acquisition using the ID of the subscribed service from the service guide based on the acquisition information, and acquiring the TBK by performing an authentication process using the TBK information.

### BRIEF DESCRIPTION OF THE DRAWINGS

The above and other aspects, features and advantages of the present invention will become more apparent from the following detailed description when taken in conjunction with the accompanying drawings in which:
FIG. 1 is a diagram illustrating a method in which the conventional terminal performs an authentication process with a BSM to receive services;
FIG. 2 is a diagram illustrating a TBK issuing system according to an embodiment of the present invention;
FIG. 3 is a diagram illustrating a procedure for acquiring a TBK using TBK-related information by a second terminal according to a first embodiment of the present invention;
FIG. 4 is a diagram illustrating a procedure for acquiring a TBK using TBK-related information by a second terminal according to a second embodiment of the present invention;
FIG. 5 is a diagram illustrating another example of a procedure for acquiring a TBK using TBK-related information by a second terminal according to the second embodiment of the present invention;
FIG. 6 is a diagram illustrating a procedure for acquiring a TBK through a broadcast channel using TBK-related information by a second terminal according to a third embodiment of the present invention; and
FIG. 7 is a diagram illustrating a procedure for acquiring a TBK through an interactive channel using TBK-related information by a second terminal according to a fourth embodiment of the present invention.

### DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness. Terms used herein are defined based on functions in the present invention and may vary according to users, operators' intention or usual practices. Therefore, the definition of the terms should be made based on contents throughout the specification.

Although embodiments of the present invention will be described using the names of entities defined in 3^{rd} Generation Partnership Project (3GPP) which is the standard for an asynchronous mobile communication system, or in Open Mobile Alliance (OMA) which is an application standard group for mobile terminals, it is not intended to limit the scope of the present invention to such standards and names, and the invention can be applied to any system having the similar technical background.

A gist of the present invention is to provide a scheme for acquiring a TBK using TBK-related information stored in a smartcard so that a user's second terminal can play back the services to which the user has previously subscribed through a first terminal.

The TBK-related information includes at least one of GlobalServiceID which is an Identifier (ID) of the subscribed service, TerminalBindingKeyID, and PermissionIssuerURL indicating a Uniform Resource Locator (URL) from which a TBK can be acquired. The PermissionIssuerURL is a URL of a BSM from which a second terminal acquires a TBK by sending a request therefor.

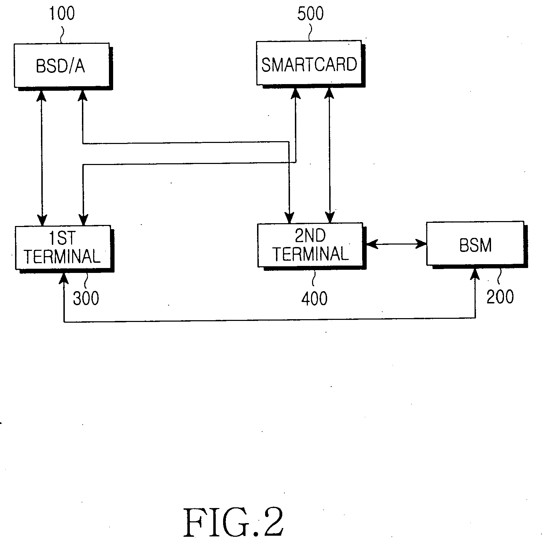

FIG. 2 is a diagram illustrating a TBK issuing system according to an embodiment of the present invention.

Referring to FIG. 2, a BCAST Service Distribution/Adaptation (BSD/A) 100 establishes a bearer through which it will transmit the BCAST service data provided from a BCAST Service Application (BSA), and determines a transmission schedule for the BCAST service. In particular, according to an embodiment of the present invention, the BSD/A 100 generates a service guide including service-related information therein, and transmits the service guide to a first terminal 300 and a second terminal 400. The service guide stores information necessary for reception of each service in the mobile communication system.

The first terminal 300 subscribes to a desired service(s) through the received service guide, and transmits at least one of the service guide and TBK-related information for the subscribed service to a smartcard 500.

The smartcard 500 stores at least one of the received service guide and TBK-related information, thereby performing a Rights Portability function in which several terminals can play back the previously subscribed service.

That is, in the case where the smartcard 500 has stored at least one of the received service guide and TBK-related information, when the smartcard 500 receives from the second terminal 400 a RetrieveRequest message of Table 1 for acquiring TBK-related information according to first and second embodiments of the present invention, it transmits at least one of the stored service guide and TBK-related information to the second terminal 400 using a RetrieveResponse message of Table 2.

Further, in the case where the smartcard 500 has stored at least one of the received service guide and TBK-related information, when the smartcard 500 receives from the second terminal 400 a RetrieveRequest message of Table 3 for acquiring TBK-related information according to third and fourth embodiments of the present invention, it transmits at least one of the stored service guide and TBK-related information to the second terminal 400 using a RetrieveResponse message Table 4.

When the same user accesses the second terminal 400, a BSM 200 performs an authentication process with the second terminal 400 before the second terminal 400 acquires TBK-related information for a service it has selected to play back now.

The second terminal 400 sends the RetrieveRequest message to the smartcard 500, and receives at least one of the stored service guide and TBK-related information from the smartcard 500 through a RetrieveResponse message in response to the RetrieveRequest message, thereby acquiring TBK-related information for the service it intends to play back now. The second terminal 400 performs an authentication process with the BSM 200 using the acquired TBK-related information, thereby being issued a TBK. Thus, the second terminal 400 can play back the previously subscribed service using the issued TBK.

**Table 1**

| Name | Type | Category | Cardinality | Description | Data Type |
|---|---|---|---|---|---|
| Retrieve Request | E | | | Retrieve Request message | |
| Requested | E1 | M | 1 | Identifier of this message | unsignedInt |
| | | | | 0: terminal delivers service ID subscribed by user, and smartcard stores received service ID. | |
| | | | | 1: terminal delivers service guide, and smartcard store received service guide. | |
| Tag | E1 | M | 1 | 2: PermissionIssuerURL and TBK ID for TBK acquisition is delivered to smartcard. | unsignedByte |
| | | | | 3: terminal requests all subscribed service IDs stored in smartcard | |
| | | | | 4: terminal requests service guide stored in smartcard. | |
| | | | | 5: terminal requests TBK acquisition information (TBK ID, Permission IssuerURL) stored in smartcard. | |
| Global ServiceID | E1 | O | 0..n | Identifier of TBK-requested service | anyRUI |
| Service Guide | E1 | O | 0..n | Service guide | string |
| | | | | It has following attributes: | |
| TBK | E1 | O | 0..n | TerminalBindingKeyID | |
| | | | | PermissionIssuerURL | |
| Terminal Binding KeyID | A | O | 1 | Identifier of TBK | anyURI |
| Permission IssuerURL | A | O | 1 | URL of Permission Issuer from which TBK can be acquired. | anyURI |

**Table 2**

| Name | Type | Category | Cardinality | Description | Data Type |
|---|---|---|---|---|---|
| Retrieve Response | E | | | Retrieve Response message | |
| Requested | E1 | M | 1 | RetrieveRequest message identifier | unsignedInt |
| Global StatusCode | E1 | M | 1 | Code value for handling result on RetrieveRequest message | unsignedByte |
| Global ServiceID | E1 | O | 0..n | Unique identifier indicating service | anyURI |
| | | | | It has following attributes: | |
| TBK | E1 | O | 0..n | TerminalBindingKeyID | |
| | | | | PermissionIssuerURL | |
| Terminal Binding KeyID | A | O | 1 | Identifier of TBK | anyURI |
| Permission IssuerURL | A | O | 1 | URL of Permission Issuer from which TBK can be acquired. | anyURI |
| Service Guide | E1 | O | 0..1 | Service Guide | string |

**Table 3**

| Name | Type | Category | Cardinality | Description | Data Type |
|---|---|---|---|---|---|
| Retrieve Request | E | | | Retrieve Request message | |
| Requested | A | O | 1 | Identifier of this request message | unsignedInt |
| Tag | A | M | 1 | Information requested by this message includes; | unsignedByte |
| | | | | 0 GlobalServiceID | |
| | | | | 1 SG Acquisition Information | |

**Table 4**

| Name | Type | Category | Cardinality | Description | Data Type |
|---|---|---|---|---|---|
| Retrieve Response | E | | | Retrieve Response message | |
| Requested | A | M | 1 | Identifier of this request message | unsignedInt |
| Global Status Code | A | M | 1 | Code value for handling result on RetrieveRequest message | Unsigned Byte |
| SG | A | O | 0..1 | URL necessary for service guide | anyURI |
| Acquisition URL | | | | acquisition | |
| Fragment id | A | O | 0..1 | Identifier of Fragment | anyURI |
| Global ServiceID | A | O | 0..1 | Unique identifier indicating service | anyURI |

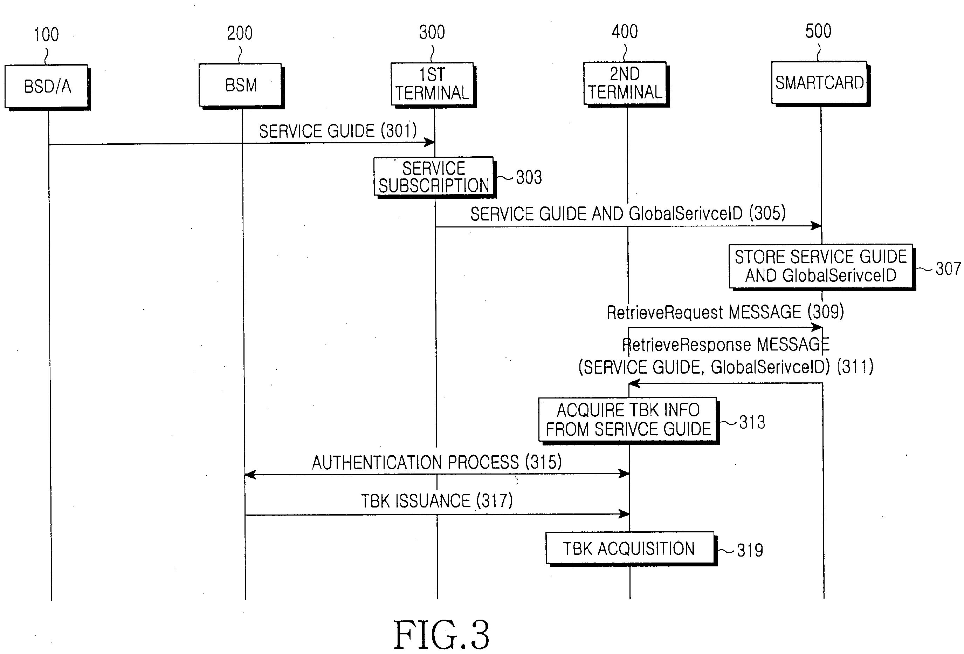

FIG. 3 is a diagram illustrating a procedure for acquiring a TBK using TBK-related information by a second terminal according to a first embodiment of the present invention.

Referring to FIG. 3, steps 301 to 307 correspond to a process of storing, in a smartcard 500, TBK-related information for a service subscribed at a first terminal 300 according to the first embodiment of the present invention, and steps 309 to 319 correspond to a process of acquiring by a second terminal 400 a TBK using the service guide stored in the smartcard 500. Herein, The service guide include TBK-ralated information. And the TBK-related information includes GlobalServiceID and TBK information (TerminalBindingKeyID, PermissionIssuerURL).

In step 301, a BSD/A 100 sends a service guide, in which service-related information is stored, to the first terminal 300. Herein, the service guide includes TBK information as the service-related information.

In step 303, the first terminal 300 subscribes to a desired service(s) using the received service guide.

In step 305, the first terminal 300 sends the received service guide and GlobalServiceID of the subscribed service to the smartcard 500.

In step 307, the smartcard 500 stores the received service guide and GlobalServiceID. Further, the smartcard 500 stores the received GlobalServiceID together with GlobalServiceID for another service, previously received from the first terminal 300.

In step 309, when the smartcard 500 is inserted or an arbitrary service is requested, the second terminal 400 sends to the smartcard 500 a RetrieveRequest message of Table 1 for acquiring the service guide and GlobalServiceIDs. In step 311, after receiving the RetrieveRequest message, the smartcard 500 sends to the second terminal 400 a RetrieveResponse message of Table 2, in which the service guide and at least one GlobalServiceID, stored in step 307, are included.

In step 313, the second terminal 400 stores the service guide and GlobalServiceID received through the RetrieveResponse message, to use them upon service playback request, selects GlobalServiceID corresponding to a service it intends to play back now, from among the received at least one GlobalServiceID, and acquires TBK information corresponding to the selected GlobalServiceID from the received service guide. At this point, the second terminal 400 can determine a URL of a BSM that issues a TBK, using PermissionIssuerURL existing in the service guide.

Thereafter, in step 315, the second terminal 400 performs a TBK authentication process defined in OMA BCAST v1.0 with a BSM 200 designated by PermissionsIssuerURL in the acquired TBK information, and is issued a TBK from the BSM 200 in step 317. Thus, in step 319, the second terminal 400 acquires a TBK of a service corresponding to the selected GlobalServiceID.

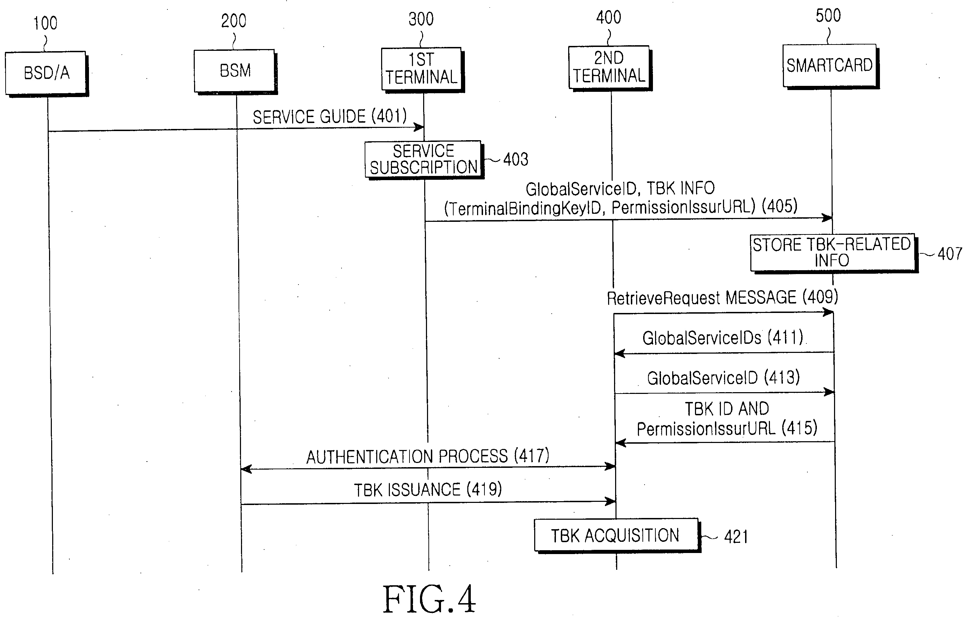

FIG. 4 is a diagram illustrating a procedure for acquiring a TBK using TBK-related information by a second terminal according to a second embodiment of the present invention.

Referring to FIG. 4, steps 401 to 407 correspond to a process of storing, in a smartcard 500, TBK-related information for a service subscribed at a first terminal 300 according to the second embodiment of the present invention, and steps 409 to 421 correspond to a process of acquiring by a second terminal 400 a TBK using the TBK-related information stored in the smartcard 500.

In step 401, a BSD/A 100 sends a service guide to the first terminal 300. In step 403, the first terminal 300 subscribes to a service using the received service guide.

In step 405, the first terminal 300 sends TBK information (TerminalBindingKeyID,PermissionsIssuerURL) and GlobalServiceID for the subscribed service to the smartcard 500. In step 407, the smartcard 500 stores the received TBK information and GlobalServiceID.

In step 409, when the smartcard 500 is inserted or an arbitrary service is requested, the second terminal 400 sends to the smartcard 500 a RetrieveRequest message of Table 1 for acquiring TBK-related information.

In step 411, the smartcard 500 sends the stored GlobalServiceID for at least one service to which the user has subscribed, to the second terminal 400 through a RetrieveResponse message of Table 2.

In step 413, the second terminal 400 stores the received at least one GlobalServiceID so as to use it upon service playback request, selects GlobalServiceID corresponding to a service it intends to play back now, from among the received at least one GlobalServiceID, and sends the selected GlobalServiceID to the smartcard 500.

In step 415, the smartcard 500 acquires TBK information (TerminalBindingKeyID,PermissionsIssuerURL) corresponding to the selected GlobalServiceID, and sends the acquired TBK information to the second terminal 400 through the RetrieveResponse message of Table 2.

In step 417, the second terminal 400 performs an authentication process with a BSM 200 appointed by PermissionIssuerURL in the acquired TBK information, and is issued a TBK from the BSM 200 in step 419. Thus, in step 421, the second terminal 400 acquires a TBK of a service corresponding to the selected GlobalServiceID.

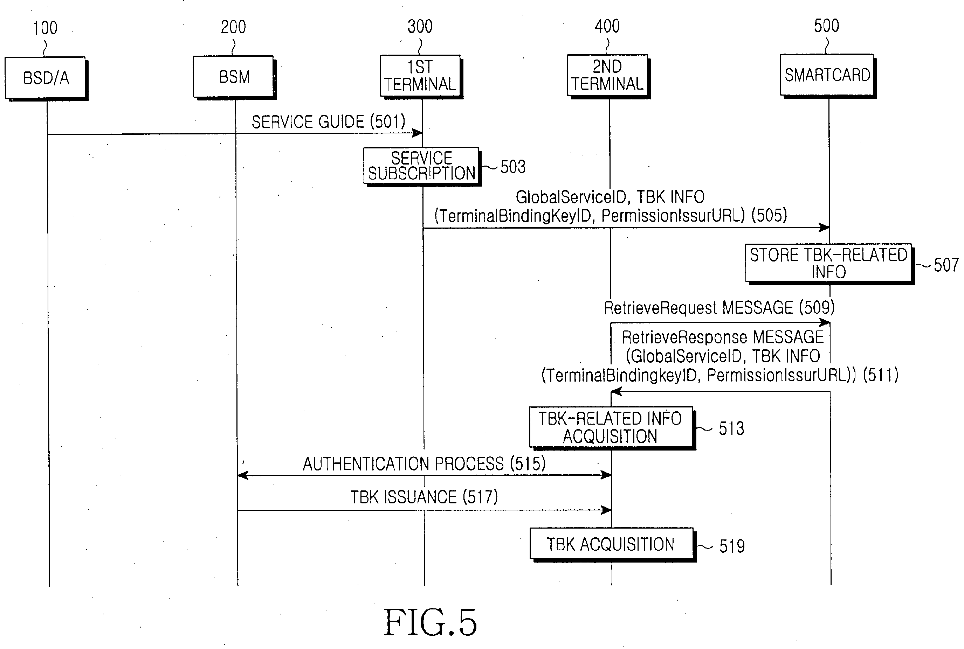

FIG. 5 is a diagram illustrating another example of a procedure for acquiring a TBK using TBK-related information by a second terminal according to the second embodiment of the present invention.

Referring to FIG. 5, steps 501 to 507 correspond to a process of storing, in a smartcard 500, TBK-related information for a service subscribed at a first terminal 300 according to the second embodiment of the present invention, and this process is equal to the process of steps 401 to 407. Steps 409 to 421 correspond to a process of acquiring by a second terminal 400 a TBK using the TBK-related information stored in the smartcard 500.

In step 509, when the smartcard 500 is inserted or an arbitrary broadcast service is requested, the second terminal 400 sends to the smartcard 500 a RetrieveRequest message of Table 1 for acquiring TBK-related information.

In step 511, the smartcard 500 sends GlobalServiceIDs, which is the stored GlobalServiceID of the service(s) subscribed by the user, and TBK information (TerminalBindingKeyID,PermissionIssuerURL) to the second terminal 400 through a RetrieveResponse message of Table 2.

In step 513, the second terminal 400 stores the received at least one TBK-related information so as to use it upon service playback request, selects GlobalServiceID of a service it intends to play back, from among the at least one TBK-related information, and acquires TBK information (TerminalBindingKeyID, PermissionIssuerURL) corresponding to the selected GlobalServiceID.

In step 515, the second terminal 400 performs an authentication process with a BSM 200 designated by PermissionIssuerURL in the acquired TBK-related information, and is issued a TBK from the BSM 200 in step 517. Thus, in step 519, the second terminal 400 acquires a TBK of a service corresponding to the selected GlobalServiceID.

In the first and second embodiments, when the first terminal 300 transmits TBK-related information to the smartcard 500, it can additionally send priority corresponding to the frequency of service playbacks. Therefore, in the case where the TBK-related information and the priority are stored together in the smartcard 500, if the priority of the service that the second terminal 400 has selected to play back now is higher, the first terminal 300 stores GlobalServiceID, TerminalBindingKeyID and PermissionIssuerURL in the smartcard 500 according to the second embodiment, so that the second terminal 400 can rapidly acquire the TBK-related information. However, if the priority of the service that the second terminal 400 has selected to play back now is lower, the first terminal 300 stores only the GlobalServiceID in the smartcard 500 according to the first embodiment, so that the second terminal 400 can determine only whether or not it has subscribed to the service.

A description will now be made of a method for acquiring a TBK through a service guide acquisition by a second terminal according to a third embodiment of the present invention, and a method for acquiring a TBK through an interactive channel using TBK-related information by a second terminal according to a fourth embodiment of the present invention.

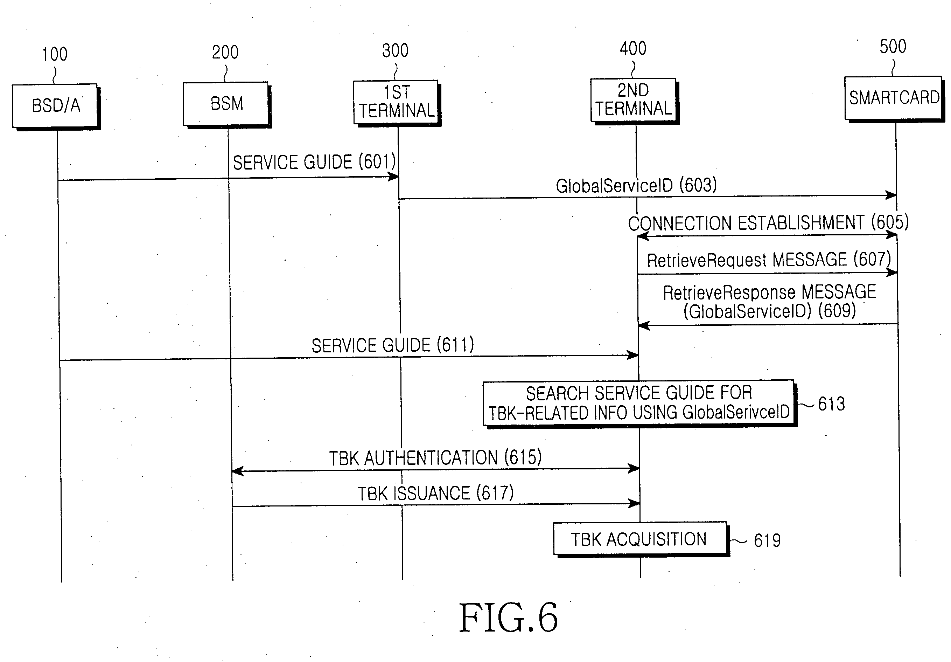

FIG. 6 is a diagram illustrating a procedure for acquiring a TBK through a service guide acquisition over the broadcast channel by a second terminal according to a third embodiment of the present invention.

Referring to FIG. 6, in step 601, a BSD/A 100 sends a service guide to a first terminal 300 that has subscribed to a particular broadcast service. Though not shown in the drawing, if a TBK is required for the broadcast service to which the first terminal 300 has subscribed, the first terminal 300 acquires a TBK through authentication with the BSM 200. The authentication with the BSM 200 and the TBK acquisition follow the details specified in the OMA BCAST v1.0 standard.

In step 603, the first terminal 300 sends GlobalServiceID indicating an ID of the subscribed service, to the smartcard 500. In step 605, the smartcard 500 establishes a connection to the second terminal 400.

In step 607, after the connection establishment is completed, the second terminal 400 sends a RetrieveRequest message of Table 3 for requesting the GlobalServiceID, to the smartcard 500. In step 609, the second terminal 400 receives from the smartcard 500 a RetrieveResponse message of Table 4, in which the GlobalServiceID is included.

In step 611, the second terminal 400 receives a service guide from the BSD/A 100 through a broadcast channel. In step 613, the second terminal 400 searches the received service guide for TBK-related information necessary for TBK acquisition using the GlobalServiceID. The search is achieved by checking if there is a TBK-related field in the service guide.

In step 615, the second terminal 400 performs an authentication process defined in OMA BCAST v1.0 after connecting with a BSM 200 corresponding to PermissionIssuerURL in the TBK-related information included in the service guide. In step 617, the second terminal 400 is issued a TBK from the BSM 200. In step 619, the second terminal 400 acquires a TBK of the service requiring the TBK.

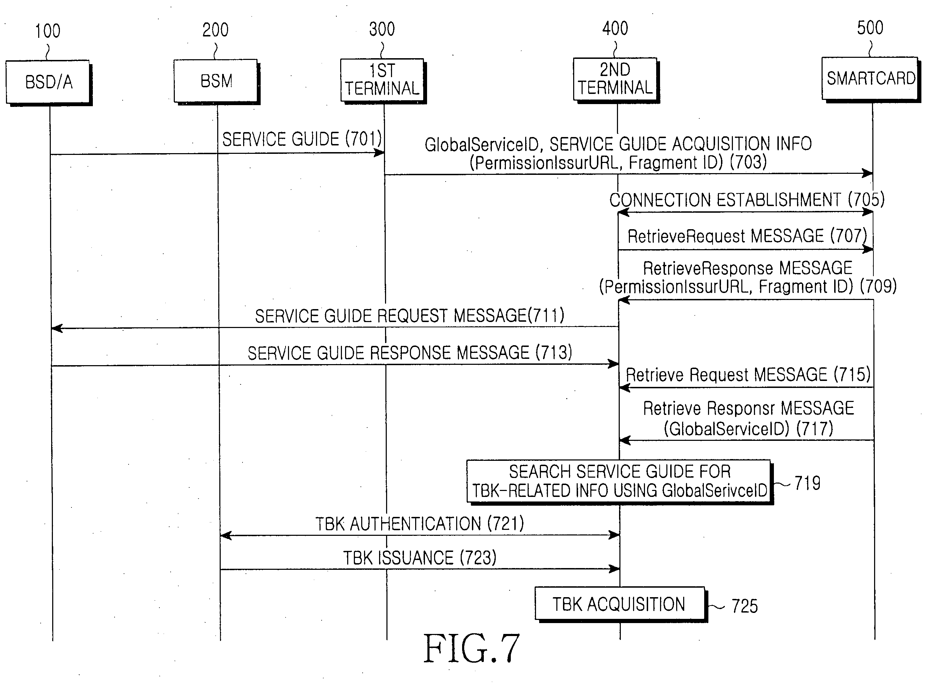

FIG. 7 is a diagram illustrating a procedure for acquiring a TBK through an interactive channel using TBK-related information by a second terminal according to a fourth embodiment of the present invention.

Referring to FIG. 7, in step 701, a BSD/A 100 sends a service guide to a first terminal 300. In step 703, the first terminal 300 subscribes to at least one service using the service guide, and then sends, to the smartcard 500, service guide acquisition information for acquiring the service guide, and an ID of the subscribed service. The service guide acquisition information includes a Fragment ID of a service guide associated with the subscribed service, and URL information (SG Acquisition URL) based on which the service guide can be acquired.

In step 705, the smartcard 500 establishes a connection to the second terminal 400. In step 707, after the connection establishment is completed, the second terminal 400 sends a RetrieveRequest message for requesting the service guide acquisition information, to the smartcard 500. In step 709, the second terminal 400 receives service guide acquisition information (SG Acquisition URL, Fragment ID) from the smartcard 500 through a RetrieveResponse message of Table 4 in order to acquire a service guide in which TBK-related information is included.

In step 711, the second terminal 400 sends a service guide request message for requesting the service guide to the BSD/A 100 according to the received service guide acquisition information (SG Acquisition URL, Fragment ID). In step 713, the second terminal 400 receives the requested service guide from the BSD/A 100.

In step 715, the second terminal 400 designates a Tag field of the RetrieveRequest message of Table 3, as '0', and sends it to the smartcard 500 in order to acquire GlobalServiceID indicating an ID of the subscribed service, included in TBK-related information. In step 717, the second terminal 400 receives from the smartcard 500 a RetrieveResponse message of Table 4, in which GlobalServiceID is included.

In step 719, the second terminal 400 searches the received service guide for TBK-related information (TerminalBindingKeyID, PermissionIssuerURL, etc.) necessary for TBK acquisition using the GlobalServiceID. The search is achieved by checking if there is a TBK-related field in the service guide.

In step 721, the second terminal 400 performs an authentication process defined in OMA BCAST v1.0 after connecting with a BSM 200 associated with the PermissionIssuerURL acquired from the service guide. In step 723, the second terminal 400 is issued a TBK from the BSM 200. In step 725, the second terminal 400 acquires a TBK of the service requiring the TBK.

Though the method defined in FIG. 7 is used for TBK acquisition, it can also be used for acquisition of the entire service guide in the second terminal 400. To this end, the second terminal 400 designates values in a message body of HTTP/1.1 in the form of <key> - <value> in step 711. That is, the second terminal 400 designates "all" in <key> and "true" in <value>, and sends them to the BSD/A 100. In response thereto, the second terminal 400 can receive the requested entire service guide from the BSD/A 100.

As is apparent from the foregoing description, according to the present invention, a user's new terminal can be issued a TBK, and thus, it can play back the service to which the user has previously subscribed.

Further, according to the present invention, when the user intends to enjoy services and contents requiring a TBK using a new terminal, use of security services and contents is possible as the TBK is provided to the new terminal.

In addition, in order to allow even a replaced terminal to enjoy the service to which the user has previously subscribed, the present invention enables the replaced terminal to receive a service guide through an interactive channel.

While the invention has been shown and described with reference to a certain preferred embodiment thereof, it will be understood by those skilled in the art that various changes in form and details may be made therein without departing from the scope of the invention as defined by the appended claims.

## Claims

1. A method for acquiring a terminal binding key, TBK, for use in a mobile communication system, the method comprising:
sending (309), by a second terminal, a request message for acquiring TBK information to a smartcard;
receiving (311), by the second terminal, a service guide and an identifier, ID, of at least one subscribed service from the smartcard through a response message to the request message, wherein the service guide and the ID of the at least one subscribed service are sent from a first terminal subscribed to the at least one service and are stored in the smartcard ; and
acquiring (313), by the second terminal, TBK information corresponding to a service that the second terminal intends to play back from among the at least one subscribed service, from the service guide depending on the ID of the at least one subscribed service, included in the response message, and acquiring (319) the TBK by performing an authentication process using the acquired TBK information.

2. The method of claim 1, wherein the TBK information comprises at least one of a TBK ID for the at least one subscribed service, and a uniform resource locator, URL, for the at least one subscribed service from which the TBK corresponding to the corresponding subscribed service can be issued.

3. A method for acquiring a terminal binding key, TBK, for use in a mobile communication system, the method comprising:
sending (409, 509), by a second terminal, a request message for acquiring TBK-related information used for encrypting an encryption key of at least one subscribed service to a smartcard, wherein the TBK-related information is sent from a first terminal subscribed to the at least one service and is stored in the smartcard ;
receiving (411, 511), by the second terminal, the TBK-related information from the smartcard through a response message to the request message ; and
acquiring (413, 415, 513), by the second terminal, TBK-related information corresponding to a service that the second terminal intends to play back from among the at least one subscribed service, depending on the response message, and acquiring the TBK (421, 519) by performing an authentication process using the TBK-related information.

4. The method of claim 3, wherein the TBK-related information comprises at least one of an identifier, ID, of the at least one subscribed service, a TBK ID for the at least one subscribed service, and a uniform resource locator, URL, for the at least one subscribed service from which the TBK corresponding to the corresponding subscribed service can be issued.

5. The method of claim 4, wherein acquiring the TBK-related information comprises:
identifying the ID of the at least one subscribed service based on the TBK-related information; and
selecting an ID of the service that the second terminal intends to play back, from among the ID of the at least one subscribed service, sending (413) the request message including the selected ID to the smartcard, and receiving (415) the response message in which a TBK ID and a URL corresponding to the selected ID are included.

6. The method of claim 4, wherein acquiring the TBK-related information comprises:
identifying the ID of the at least one subscribed service, and the TBK ID and the URL based on the TBK-related information; and
selecting an ID of the service that the second terminal intends to play back, from among the ID of the at least one subscribed service, and acquiring (513) a TBK ID and a URL corresponding to the selected ID.

7. A method for acquiring a terminal binding key, TBK, for use in a mobile communication system, the method comprising:
sending (707), by a second terminal, a first request message for requesting acquisition information for acquiring a service guide in which TBK information is included, to a smartcard;
receiving (709) the acquisition information from the smartcard in order to acquire the service guide; sending (711), by the second terminal, a second request message for requesting the service guide based on the acquisition information for acquiring the service guide to a broadcast service distribution/adaptation, BSD/A, and receiving (713) the requested service guide based on the acquisition information from the BSD/A, wherein the acquisition information is sent with the ID of the at least from a first terminal subscribed to the at least one service with the ID of the at least one subscribed service to a smartcard and is stored with the ID of the at least one subscribed service in the smartcard;
receiving (717), by the second terminal, the ID of the at least one subscribed service from the smartcard by sending a third request message for acquiring the ID of the at least one subscribed service to the smartcard; and
acquiring (719), by the second terminal, TBK information necessary for TBK acquisition using the ID of the at least one subscribed service from the service guide received based on the acquisition information, and acquiring (725) the TBK by performing an authentication process using the TBK information.

8. The method of claim 7, wherein the TBK information comprises at least one of a TBK ID for the at least one subscribed service, and a uniform resource locator, URL, for the at least one subscribed service from which the TBK corresponding to the corresponding subscribed service can be issued.

9. The method of claim 7, wherein the acquisition information comprises a URL from which the service guide can be acquired, and a fragment ID of the service guide.

10. A method for acquiring a terminal binding key, TBK, for use in a mobile communication system, the method comprising:
receiving (305), by a smartcard, a service guide and an identifier, ID, of at least one service from a first terminal subscribed to the at least one service;
storing (307), by the smartcard, the service guide and the ID of the at least one subscribed service;
receiving (309), by the smartcard, a request message for acquiring TBK information from a second terminal; and
sending (311), by the smartcard, the service guide and the ID of the at least one service to the second terminal through a response message to the request message,
wherein the response message includes TBK information corresponding to a service that the second terminal intends to play back from among the at least one subscribed service, and the second terminal acquires the TBK information from the service guide depending on the ID of the at least one subscribed service and the TBK by performing an authentication process using the acquired TBK information.

11. The method of claim 10, wherein the TBK information comprises at least one of a TBK ID for the at least one subscribed service, and a uniform resource locator, URL, for the at least one subscribed service from which the TBK corresponding to the corresponding subscribed service can be issued.

12. A method for acquiring a terminal binding key, TBK, for use in a mobile communication system, the method comprising:
receiving (405), by a smartcard, TBK-related information used for encrypting an encryption key of at least one subscribed service from a first terminal subscribed to at least one service;
storing (407), by the smartcard, the TBK-related information; and
receiving (409, 413, 509), by the smartcard, a request message for acquiring the TBK-related information from a second terminal and sending (411, 415, 511), by the smartcard, the stored TBK-related information to the second terminal through a response message to the request message,
wherein the response message includes the TBK-related information corresponding to a service that the second terminal intends to play back from among the at least one subscribed service, and the second terminal acquires the TBK information depending on the response message and the TBK by performing an authentication process using the TBK-related information.

13. The method of claim 12, wherein the TBK-related information comprises at least one of an identifier, ID, of the at least one subscribed service, a TBK ID for the at least one subscribed service, and a uniform resource locator, URL, for the at least one subscribed service from which the TBK corresponding to the corresponding subscribed service can be issued.

14. The method of claim 13, wherein receiving the request message for acquiring the TBK-related information and sending the stored TBK-related information comprising:
receiving (409), by the smartcard, a request for the ID of the at least one subscribed service from the second terminal, and sending (411) the ID of the at least one subscribed service to the second terminal; and
receiving (413), by the smartcard, the request message including an ID of the service that the second terminal selects and intends to play back, from among the ID of the at least one subscribed service, and sending (415) the response message in which a TBK ID and a URL corresponding to the selected ID are included.

15. The method of claim 13, wherein sending the stored TBK-related information comprising:
sending (511), by the smartcard, an ID of the at least one subscribed service, and a TBK ID and a URL of the at least one subscribed service through the response message,
wherein the second terminal selects an ID of the service that the second terminal intends to play back, from among the ID of the at least one subscribed service, and acquires a TBK ID and a URL corresponding to the selected ID.

16. A method for acquiring a terminal binding key, TBK, for use in a mobile communication system, the method comprising:
receiving (703), by a smartcard, acquisition information for acquiring a service guide in which TBK information is included and receiving, by the smartcard, an identifier, ID, of at least one subscribed service, from a first terminal subscribed to at least one service;
storing, by the smartcard, the acquisition information and the ID of the at least one subscribed service; and sending (709) by the smartcard, the acquisition information in response to a receipt of a first request for acquiring the acquisition information from a second terminal;
sending (717), by the smartcard, the ID of the at least one subscribed service from the smartcard in response to receipt of a second request message for acquiring the ID of the at least one subscribed service from the second terminal,
wherein the second terminal acquires TBK information necessary for TBK acquisition using the ID of the at least one subscribed service from the service guide based on the acquisition information, and acquires the TBK by performing an authentication process using the TBK information.

17. The method of claim 16, wherein the TBK information comprises at least one of a TBK ID for the at least one subscribed service, and a uniform resource locator, URL, for the at least one subscribed service from which the TBK corresponding to the corresponding subscribed service can be issued.

18. The method of claim 16, wherein the acquisition information comprises a URL from which the service guide can be acquired, and a fragment ID of the service guide.

19. A terminal for acquiring a terminal binding key, TBK, for use in a mobile communication system, the terminal (400) comprising:
a transceiver for sending (309) a request message for acquiring TBK information to a smartcard, and for receiving (311), a service guide and an identifier, ID, of at least one service from the smartcard through a response message to the request message, wherein service guide and the ID of at least one service are sent from another terminal subscribed to the at least one service and are stored in the smartcard ; and
a controller for acquiring (313) TBK information corresponding to a service that the terminal intends to play back from among the at least one subscribed service, from the service guide depending on the ID of the at least one subscribed service, included in the response message, and for acquiring (319) the TBK by performing an authentication process using the acquired TBK information.

20. The terminal of claim 19, wherein the TBK information comprises at least one of a TBK ID for the at least one subscribed service, and a uniform resource locator, URL, for the at least one subscribed service from which the TBK corresponding to the corresponding subscribed service can be issued.

21. A terminal for acquiring a terminal binding key, TBK, for use in a mobile communication system, the terminal comprising:
a transceiver for sending (409, 509) a request message for acquiring TBK-related information used for encrypting an encryption key of at least one subscribed service to a smartcard, wherein the TBK-related information is sent from another terminal subscribed to the at least one service and is stored in the smartcard, and for receiving (411, 511) the TBK-related information from the smartcard through a response message to the request message; and
a controller for acquiring (413, 415, 513) TBK-related information corresponding to a service that the terminal intends to play back from among the at least one subscribed service, depending on the response message, and for acquiring the TBK (421, 519) by performing an authentication process using the TBK-related information.

22. The terminal of claim 21, wherein the TBK-related information comprises at least one of an identifier, ID, of the at least one subscribed service, a TBK ID for the at least one subscribed service, and a uniform resource locator, URL, for the at least one subscribed service from which the TBK corresponding to the corresponding subscribed service can be issued.

23. The terminal of claim 22, wherein the terminal identifies the ID of the at least one subscribed service based on the TBK-related information, selects an ID of the service that the terminal intends to play back, from among the ID of the at least one subscribed service, sends (413) the request message including the selected ID to the smartcard, and receives (415) the response message in which a TBK ID and a URL corresponding to the selected ID are included.

24. The terminal of claim 22, wherein the terminal identifies the ID of the at least one subscribed service, and the TBK ID and the URL based on the TBK-related information, selects an ID of the service that the terminal intends to play back, from among the ID of the at least one subscribed service, and acquires (513) a TBK ID and a URL corresponding to the selected ID.

25. A terminal for acquiring a terminal binding key, TBK, for use in a mobile communication system, the terminal comprising:
a transceiver for sending (707) a first request message for requesting acquisition information for acquiring a service guide in which TBK information is included, to a smartcard, for receiving (709) the acquisition information from the smartcard; a transceiver for sending (711) a second request message for requesting the service guide based on the acquisition information for acquiring the service guide, to a broadcast service distribution/adaptation, BSD/A, for receiving (713) the requested service guide based on the acquisition information from the BSD/A, wherein the acquisition information is sent from another terminal subscribed to the at least one service and is stored with the ID of the at least one subscribed service in the smartcard, and for receiving (717) the ID of the at least one subscribed service from the smartcard by sending a third request message for acquiring the ID of the at least one subscribed service to the smartcard; and
a controller for acquiring (719) TBK information necessary for TBK acquisition using the ID of the at least one subscribed service from the service guide received on the acquisition information, and for acquiring (725) the TBK by performing an authentication process using the TBK information.

26. The terminal of claim 25, wherein the TBK information comprises at least one of a TBK ID for the at least one subscribed service, and a uniform resource locator, URL, for the at least one subscribed service from which the TBK corresponding to the corresponding subscribed service can be issued.

27. The terminal of claim 25, wherein the acquisition information comprises a URL from which the service guide can be acquired, and a Fragment ID of the service guide.

28. A smartcard for acquiring a terminal binding key, TBK, for use in a mobile communication system, the smartcard (500) comprising:
a microprocessor for receiving (305) a service guide and an identifier, ID, of at least one service from a first terminal subscribed to the at least one service, for receiving (309) a request message for acquiring TBK information from a second terminal, and for sending (311) the service guide and the ID of the at least one service to the second terminal through a response message to the request message; and
a memory for storing (307) the service guide and the ID of the at least one subscribed service, wherein the service guide includes TBK information, wherein the TBK information includes the ID of the at least one subscribed service, and wherein the response message includes TBK information corresponding to a service that the second terminal intends to play back from among the at least one subscribed service, by acquiring the TBK information from the service guide depending on the ID of the at least one subscribed service and the TBK by performing an authentication process using the acquired TBK information.

29. The smartcard of claim 28, wherein the TBK information comprises at least one of a TBK ID for the at least one subscribed service, and a uniform resource locator, URL, for the at least one subscribed service from which the TBK corresponding to the corresponding subscribed service can be issued.

30. A smartcard for acquiring a terminal binding key, TBK, for use in a mobile communication system, the smartcard (500) comprising:
a microprocessor for receiving (405) TBK-related information used for encrypting an encryption key of at least one service from a first terminal subscribed to the at least one service, for receiving (409, 413, 509) a request message for acquiring the TBK-related information from a second terminal, and for sending (411, 415, 511) the stored TBK-related information to the second terminal through a response message to the request message; and
a memory for storing (407) the TBK-related information,
wherein the response message includes the TBK-related information corresponding to a service that the second terminal intends to play back from among the at least one subscribed service, by acquiring the TBK information depending on the response message and the TBK by performing an authentication process using the TBK-related information.

31. The smartcard of claim 30, wherein the TBK-related information comprises at least one of an identifier, ID, of the at least one subscribed service, a TBK ID for the at least one subscribed service, and a uniform resource locator, URL, for the at least one subscribed service from which the TBK corresponding to the corresponding subscribed service can be issued.

32. The smartcard of claim 31, wherein the microprocessor receives (409) a request for the ID of the at least one subscribed service from the second terminal, and sends (411) the ID of the at least one subscribed service to the second terminal, receives (413) the request message including an ID of the service that the second terminal selects and intends to play back, from among the ID of the at least one subscribed service, and sends (415) the response message in which a TBK ID and a URL corresponding to the selected ID are included.

33. The smartcard of claim 31, wherein the microprocessor sends (511) an ID of the at least one subscribed service, and a TBK ID and a URL of the at least one subscribed service through the response message, and
wherein the second terminal selects an ID of the service that the second terminal intends to play back, from among the ID of the at least one subscribed service, and acquires a TBK ID and a URL corresponding to the selected ID.

34. A smartcard for acquiring a terminal binding key, TBK, for use a mobile communication system, the smartcard (500) comprising:
a microprocessor for receiving (703) acquisition information for acquiring a service guide and for receiving an identifier, ID, of at least one service, from a first terminal subscribed to the at least one service, for sending (709) the acquisition information for acquiring the service guide from the smartcard in response to a first request message for acquiring the acquisition information from a second terminal; for sending (717) the ID of the at least one subscribed service from the smartcard in response to receipt of a second request message for acquiring the ID of the at least one subscribed service from the second terminal; and
a memory for storing the acquisition information and the ID of the at least one service, wherein the ID of the at least one subscribed service is included in TBK information in the service guide acquirable based on the acquisition information, and used, by the second terminal, for acquiring the TBK information necessary for TBK acquisition using the ID of the at least one subscribed service from the service guide acquired based on the acquisition information, and for acquiring the TBK by performing an authentication process using the TBK information.

35. The smartcard of claim 34, wherein the TBK information comprises at least one of a TBK ID for the at least one subscribed service, and a uniform resource locator, URL, for the at least one subscribed service from which the TBK corresponding to the corresponding subscribed service can be issued.

36. The smartcard of claim 34, wherein the acquisition information comprises a URL from which the service guide can be acquired, and a Fragment ID of the service guide.

## Patentansprüche

1. Verfahren zum Erlangen eines Endgeräte-Bindungsschlüssels, Terminal Binding Keys, TBKs, zur Verwendung in einem Mobilkommunikationssystem, wobei das Verfahren Folgendes umfasst:
Senden (309) einer Anforderungsmitteilung zum Erlangen von TBK-Informationen durch ein zweites Endgerät zu einer Chipkarte;
Empfangen (311) einer Dienstanleitung und eines Identifikators, IDs, mindestens eines gebuchten Dienstes durch das zweite Endgerät von der Chipkarte über eine Antwortmitteilung auf die Anforderungsmeldung, wobei die Dienstanleitung und der ID des mindestens einen gebuchten Dienstes von einem ersten Endgerät gesendet werden, das den mindestens einen Dienst gebucht hat, und in der Chipkarte gespeichert sind; und
Erlangen (313) von TBK-Informationen durch das zweite Endgerät, die einem Dienst, den das zweite Endgerät wiederzugeben beabsichtigt, aus dem mindestens einen gebuchten Dienst entsprechen, von der Dienstanleitung abhängig vom ID des mindestens einen gebuchten Dienstes, der in der Antwortmitteilung beinhaltet ist, und Erlangen (319) des TBK durch Durchführen eines Authentifikationsprozesses unter Verwendung der erlangten TBK-Informationen.

2. Verfahren nach Anspruch 1, wobei die TBK-Informationen mindestens eines von einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

3. Verfahren zum Erlangen eines Endgeräte-Bindungsschlüssels, Terminal Binding Keys, TBKs, zur Verwendung in einem Mobilkommunikationssystem, wobei das Verfahren Folgendes umfasst:
Senden (409, 509) einer Anforderungsmitteilung zum Erlangen TBK-bezogener Informationen, die zum Verschlüsseln eines Chiffrierschlüssels mindestens eines gebuchten Dienstes verwendet werden, durch ein zweites Endgerät zu einer Chipkarte, wobei die TBK-bezogenen Informationen von einem ersten Endgerät gesendet werden, das den mindestens einen Dienst gebucht hat, und in der Chipkarte gespeichert sind;
Empfangen (411, 511) der TBK-bezogenen Informationen durch das zweite Endgerät von der Chipkarte über eine Antwortmitteilung auf die Anforderungsmeldung und
Erlangen (413, 415, 513) TBK-bezogener Informationen durch das zweite Endgerät, die einem Dienst, den das zweite Endgerät wiederzugeben beabsichtigt, aus dem mindestens einen gebuchten Dienst entsprechen, abhängig von der Antwortmitteilung, und Erlangen des TBKs (421, 519) durch Durchführen eines Authentifikationsprozesses unter Verwendung der TBK-bezogenen Informationen.

4. Verfahren nach Anspruch 3, wobei die TBK-bezogenen Informationen mindestens eines von einem Identifikator, ID, des mindestens einen gebuchten Dienstes, einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

5. Verfahren nach Anspruch 4, wobei Erlangen der TBK-bezogenen Informationen Folgendes umfasst:
Identifizieren des IDs des mindestens einen gebuchten Dienstes basierend auf den TBK-bezogenen Informationen und
Auswählen eines ID des Dienstes, den das zweite Endgerät wiederzugeben beabsichtigt, aus dem ID des mindestens einen gebuchten Dienstes, Senden (413) der Anforderungsmitteilung, die den ausgewählten ID beinhaltet, zur Chipkarte und Empfangen (415) der Antwortmitteilung, in der ein TBK-ID und eine URL beinhaltet sind, die dem ausgewählten ID entsprechen.

6. Verfahren nach Anspruch 4, wobei Erlangen der TBK-bezogenen Informationen Folgendes umfasst:
Identifizieren des IDs des mindestens einen gebuchten Dienstes und des TBK-ID und der URL basierend auf den TBK-bezogenen Informationen und
Auswählen eines ID des Dienstes, den das zweite Endgerät wiederzugeben beabsichtigt, aus dem ID des mindestens einen gebuchten Dienstes, und Erlangen (513) eines TBK-ID und einer URL, die dem ausgewählten ID entspricht.

7. Verfahren zum Erlangen eines Endgeräte-Bindungsschlüssels, Terminal Binding Keys, TBKs, zur Verwendung in einem Mobilkommunikationssystem, wobei das Verfahren Folgendes umfasst:
Senden (707) einer ersten Anforderungsmitteilung durch ein zweites Endgerät zu einer Chipkarte zum Anfordern von Erlangungsinformationen zum Erlangen einer Dienstanleitung, in der TBK-Informationen beinhaltet sind;
Empfangen (709) der Erlangungsinformationen von der Chipkarte zu dem Zweck, die Dienstanleitung zu erlangen; Senden (711) einer zweiten Anforderungsmitteilung durch das zweite Endgerät zu einer Rundsendungsdienstverteilung/-anpassung, Broadcast Service Distribution/Adaptation, BSD/A, zum Anfordern der Dienstanleitung basierend auf den Erlangungsinformationen zum Erlangen der Dienstanleitung und Empfangen (713) der angeforderten Dienstanleitung basierend auf den Erlangungsinformationen von der BSD/A, wobei die Erlangungsinformationen von einem ersten Endgerät, das den mindestens einen Dienst gebucht hat, mit dem ID des mindestens einen gebuchten Dienstes zu einer Chipkarte gesendet werden und mit dem ID des mindestens einen gebuchten Dienstes in der Chipkarte gespeichert werden;
Empfangen (717) des IDs des mindestens einen gebuchten Dienstes von der Chipkarte durch das zweite Endgerät durch Senden einer dritten Anforderungsmitteilung zum Erlangen des IDs des mindestens einen gebuchten Dienstes zur Chipkarte und
Erlangen (719) von TBK-Informationen durch das zweite Endgerät, die zur TBK-Erlangung notwendig sind, unter Verwendung des IDs des mindestens einen gebuchten Dienstes von der empfangenen Dienstanleitung basierend auf den Erlangungsinformationen und Erlangen (725) des TBK durch Durchführen eines Authentifikationsprozesses unter Verwendung der TBK-Informationen.

8. Verfahren nach Anspruch 7, wobei die TBK-Informationen mindestens eines von einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

9. Verfahren nach Anspruch 7, wobei die Erlangungsinformationen eine URL, von der die Dienstanleitung erlangt werden kann, und einen Fragment-ID der Dienstanleitung umfassen.

10. Verfahren zum Erlangen eines Endgeräte-Bindungsschlüssels, Terminal Binding Keys, TBKs, zur Verwendung in einem Mobilkommunikationssystem, wobei das Verfahren Folgendes umfasst:
Empfangen (305) einer Dienstanleitung und eines Identifikators, IDs, mindestens eines Dienstes durch eine Chipkarte von einem ersten Endgerät, das den mindestens einen Dienst gebucht hat;
Speichern (307) der Dienstanleitung und des IDs des mindestens einen gebuchten Dienstes durch die Chipkarte,
Empfangen (309) einer Anforderungsmitteilung zum Erlangen von TBK-Informationen von einem zweiten Endgerät durch die Chipkarte und
Senden (311) der Dienstanleitung und des IDs des mindestens einen Dienstes durch die Chipkarte zum zweiten Endgerät über eine Antwortmitteilung auf die Anforderungsmitteilung,
wobei die Antwortmitteilung TBK-Informationen beinhaltet, die einem Dienst, den das zweite Endgerät wiederzugeben beabsichtigt, aus dem mindestens einen gebuchten Dienst entsprechen, und das zweite Endgerät die TBK-Informationen von der Dienstanleitung abhängig vom ID des mindestens einen gebuchten Dienstes und dem TBK durch Durchführen eines Authentifikationsprozesses unter Verwendung der erlangten TBK-Informationen erlangt.

11. Verfahren nach Anspruch 10, wobei die TBK-Informationen mindestens eines von einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

12. Verfahren zum Erlangen eines Endgeräte-Bindungsschlüssels, Terminal Binding Keys, TBKs, zur Verwendung in einem Mobilkommunikationssystem, wobei das Verfahren Folgendes umfasst:
Empfangen (405) von TBK-bezogenen Informationen, die zum Verschlüsseln eines Chiffrierschlüssels mindestens eines gebuchten Dienstes verwendet werden, durch eine Chipkarte von einem ersten Endgerät, das mindestens einen Dienst gebucht hat;
Speichern (407) der TBK-bezogenen Informationen durch die Chipkarte und
Empfangen (409, 413, 509) einer Anforderungsmitteilung zum Erlangen der TBK-bezogenen Informationen durch die Chipkarte von einem zweiten Endgerät und Senden (411, 415, 511) der gespeicherten TBK-bezogenen Informationen durch die Chipkarte zum zweiten Endgerät über eine Antwortmitteilung auf die Anforderungsmeldung,
wobei die Antwortmitteilung die TBK-bezogenen Informationen beinhaltet, die einem Dienst, den das zweite Endgerät wiederzugeben beabsichtigt, aus dem mindestens einen gebuchten Dienst entsprechen, und das zweite Endgerät die TBK-Informationen abhängig von der Antwortmitteilung und dem TBK durch Durchführen eines Authentifikationsprozesses unter Verwendung der TBK-bezogenen Informationen erlangt.

13. Verfahren nach Anspruch 12, wobei die TBK-bezogenen Informationen mindestens eines von einem Identifikator, ID, des mindestens einen gebuchten Dienstes, einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

14. Verfahren nach Anspruch 13, wobei Empfangen der Anforderungsmitteilung zum Erlangen der TBK-bezogenen Informationen und Senden der gespeicherten TBK-bezogenen Informationen Folgendes umfasst:
Empfangen (409) einer Anforderung für den ID des mindestens einen gebuchten Dienstes vom zweiten Endgerät durch die Chipkarte und Senden (411) des IDs des mindestens einen gebuchten Dienstes zum zweiten Endgerät und
Empfangen (413) der Anforderungsmitteilung, die einen ID des Dienstes, den das zweite Endgerät auswählt und wiederzugeben beabsichtigt, aus dem ID des mindestens einen gebuchten Dienstes beinhaltet, durch die Chipkarte und Senden (415) der Antwortmitteilung, in der ein TBK-ID und eine URL beinhaltet sind, die dem ausgewählten ID entsprechen.

15. Verfahren nach Anspruch 13, wobei Senden der gespeicherten TBK-bezogenen Informationen Folgendes umfasst:
Senden (511) eines IDs des mindestens einen gebuchten Dienstes und eines TBK-ID und einer URL des mindestens einen gebuchten Dienstes durch die Chipkarte über die Antwortmitteilung,
wobei das zweite Endgerät einen ID des Dienstes, den das zweite Endgerät wiederzugeben beabsichtigt, aus dem ID des mindestens einen gebuchten Dienstes auswählt und einen TBK-ID und eine URL erlangt, die dem ausgewählten ID entspricht.

16. Verfahren zum Erlangen eines Endgeräte-Bindungsschlüssels, Terminal Binding Keys, TBKs, zur Verwendung in einem Mobilkommunikationssystem, wobei das Verfahren Folgendes umfasst:
Empfangen (703) von Erlangungsinformationen durch eine Chipkarte zum Erlangen einer Dienstanleitung, in der TBK-Informationen beinhaltet sind, und Empfangen eines Identifikators, IDs, des mindestens einen gebuchten Dienstes durch die Chipkarte von einem ersten Endgerät, das mindestens einen Dienst gebucht hat;
Speichern der Erlangungsinformationen und des IDs des mindestens einen gebuchten Dienstes durch die Chipkarte und
Senden (709) der Erlangungsinformationen durch die Chipkarte in Reaktion auf einen Empfang einer ersten Anforderung zum Erlangen der Erlangungsinformationen von einem zweiten Endgerät;
Senden (717) des IDs des mindestens einen gebuchten Dienstes von der Chipkarte durch die Chipkarte in Reaktion auf Empfang einer zweiten Anforderungsmitteilung zum Erlangen des IDs des mindestens einen gebuchten Dienstes vom zweiten Endgerät;
wobei das zweite Endgerät TBK-Informationen, die zur TBK-Erlangung notwendig sind, unter Verwendung des IDs des mindestens einen gebuchten Dienstes von der Dienstanleitung basierend auf den Erlangungsinformationen erlangt und den TBK durch Durchführen eines Authentifikationsprozesses unter Verwendung der TBK-Informationen erlangt.

17. Verfahren nach Anspruch 16, wobei die TBK-Informationen mindestens eines von einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

18. Verfahren nach Anspruch 16, wobei die Erlangungsinformationen eine URL, von der die Dienstanleitung erlangt werden kann, und einen Fragment-ID der Dienstanleitung umfassen.

19. Endgerät zum Erlangen eines Endgeräte-Bindungsschlüssels, Terminal Binding Keys, TBKs, zur Verwendung in einem Mobilkommunikationssystem, wobei das Endgerät (400) Folgendes umfasst:
einen Sendeempfänger zum Senden (309) einer Anforderungsmitteilung zum Erlangen von TBK-Informationen zu einer Chipkarte und zum Empfangen (311) einer Dienstanleitung und eines Identifikators, IDs, mindestens eines Dienstes von der Chipkarte über eine Antwortmitteilung auf die Anforderungsmeldung, wobei Dienstanleitung und der ID mindestens eines Dienstes von einem anderen Endgerät gesendet werden, das den mindestens einen Dienst gebucht hat, und in der Chipkarte gespeichert sind; und
eine Steuerung zum Erlangen (313) von TBK-Informationen, die einem Dienst, den das Endgerät wiederzugeben beabsichtigt, aus dem mindestens einen gebuchten Dienst entsprechen, von der Dienstanleitung abhängig vom ID des mindestens einen gebuchten Dienstes, der in der Antwortmitteilung beinhaltet ist, und zum Erlangen (319) des TBK durch Durchführen eines Authentifikationsprozesses unter Verwendung der erlangten TBK-Informationen.

20. Endgerät nach Anspruch 19, wobei die TBK-Informationen mindestens eines von einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

21. Endgerät zum Erlangen eines Endgeräte-Bindungsschlüssels, Terminal Binding Keys, TBKs, zur Verwendung in einem Mobilkommunikationssystem, wobei das Endgerät Folgendes umfasst:
einen Sendeempfänger zum Senden (409, 509) einer Anforderungsmitteilung zum Erlangen TBK-bezogener Informationen, die zum Verschlüsseln eines Chiffrierschlüssels mindestens eines gebuchten Dienstes verwendet werden, zu einer Chipkarte, wobei die TBK-bezogenen Informationen von einem anderen Endgerät gesendet werden, das den mindestens einen Dienst gebucht hat, und in der Chipkarte gespeichert sind; und zum Empfangen (411, 511) der TBK-bezogenen Informationen von der Chipkarte über eine Antwortmitteilung auf die Anforderungsmeldung; und
eine Steuerung zum Erlangen (413, 415, 513) TBK-bezogener Informationen, die einem Dienst, den das Endgerät wiederzugeben beabsichtigt, aus dem mindestens einen gebuchten Dienst entsprechen, abhängig von der Antwortmitteilung und zum Erlangen des TBKs (421, 519) durch Durchführen eines Authentifikationsprozesses unter Verwendung der TBK-bezogenen Informationen.

22. Endgerät nach Anspruch 21, wobei die TBK-bezogenen Informationen mindestens eines von einem Identifikator, ID, des mindestens einen gebuchten Dienstes, einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

23. Endgerät nach Anspruch 22, wobei das Endgerät den ID des mindestens einen gebuchten Dienstes basierend auf den TBK-bezogenen Informationen identifiziert, einen ID des Dienstes, den das Endgerät wiederzugeben beabsichtigt, aus dem ID des mindestens einen gebuchten Dienstes auswählt, die Anforderungsmitteilung, die den ausgewählten ID beinhaltet, zur Chipkarte sendet (413) und die Antwortmitteilung empfängt (415), in der ein TBK-ID und eine URL beinhaltet sind, die dem ausgewählten ID entsprechen.

24. Endgerät nach Anspruch 22, wobei das Endgerät den ID des mindestens einen gebuchten Dienstes und den TBK-ID und die URL basierend auf den TBK-bezogenen Informationen identifiziert, einen ID des Dienstes, den das Endgerät wiederzugeben beabsichtigt, aus dem ID des mindestens einen gebuchten Dienstes auswählt und einen TBK-ID und eine URL erlangt (513), die dem ausgewählten ID entsprechen.

25. Endgerät zum Erlangen eines Endgeräte-Bindungsschlüssels, Terminal Binding Keys, TBKs, zur Verwendung in einem Mobilkommunikationssystem, wobei das Endgerät Folgendes umfasst:
einen Sendeempfänger zum Senden (707) einer ersten Anforderungsmitteilung zu einer Chipkarte zum Anfordern von Erlangungsinformationen zum Erlangen einer Dienstanleitung, in der TBK-Informationen beinhaltet sind, zum Empfangen (709) der Erlangungsinformationen von der Chipkarte; einen Sendeempfänger zum Senden (711) einer zweiten Anforderungsmitteilung zu einer Rundsendungsdienstverteilung/-anpassung, Broadcast Service Distribution/Adaptation, BSD/A, zum Anfordern der Dienstanleitung basierend auf den Erlangungsinformationen zum Erlangen der Dienstanleitung, zum Empfangen (713) der angeforderten Dienstanleitung basierend auf den Erlangungsinformationen von der BSD/A, wobei die Erlangungsinformationen von einem anderen Endgerät gesendet werden, das den mindestens einen Dienst gebucht hat, und mit dem ID des mindestens einen gebuchten Dienstes in der Chipkarte gespeichert sind, und zum Empfangen (717) des IDs des mindestens einen gebuchten Dienstes von der Chipkarte durch Senden einer dritten Anforderungsmitteilung zum Erlangen des IDs des mindestens einen gebuchten Dienstes zur Chipkarte; und
eine Steuerung zum Erlangen (719) von TBK-Informationen, die zur TBK-Erlangung notwendig sind, unter Verwendung des IDs des mindestens einen gebuchten Dienstes von der Dienstanleitung, die auf den Erlangungsinformationen empfangen worden ist; und zum Erlangen (725) des TBK durch Durchführen eines Authentifikationsprozesses unter Verwendung der TBK-Informationen.

26. Endgerät nach Anspruch 25, wobei die TBK-Informationen mindestens eines von einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

27. Endgerät nach Anspruch 25, wobei die Erlangungsinformationen eine URL, von der die Dienstanleitung erlangt werden kann, und einen Fragment-ID der Dienstanleitung umfassen.

28. Chipkarte zum Erlangen eines Endgeräte-Bindungsschlüssels, Terminal Binding Keys, TBKs, zur Verwendung in einem Mobilkommunikationssystem, wobei die Chipkarte (500) Folgendes umfasst:
einen Mikroprozessor zum Empfangen (305) einer Dienstanleitung und eines Identifikators, IDs, mindestens eines Dienstes von einem ersten Endgerät, das den mindestens einen Dienst gebucht hat; zum Empfangen (309) einer Anforderungsmitteilung zum Erlangen von TBK-Informationen von einem zweiten Endgerät und zum Senden (311) der Dienstanleitung und des IDs des mindestens einen Dienstes zum zweiten Endgerät über eine Antwortmitteilung auf die Anforderungsmitteilung und
einen Speicher zum Speichern (307) der Dienstanleitung und des IDs des mindestens einen gebuchten Dienstes,
wobei die Dienstanleitung TBK-Informationen beinhaltet, wobei die TBK-Informationen den ID des mindestens einen gebuchten Dienstes beinhalten und wobei die Antwortmitteilung TBK-Informationen beinhaltet, die einem Dienst, den das zweite Endgerät wiederzugeben beabsichtigt, aus dem mindestens einen gebuchten Dienst entsprechen, durch Erlangen der TBK-Informationen von der Dienstanleitung abhängig vom ID des mindestens einen gebuchten Dienstes und dem TBK durch Durchführen eines Authentifikationsprozesses unter Verwendung der erlangten TBK-Informationen.

29. Chipkarte nach Anspruch 28, wobei die TBK-Informationen mindestens eines von einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

30. Chipkarte zum Erlangen eines Endgeräte-Bindungsschlüssels, Terminal Binding Keys, TBKs, zur Verwendung in einem Mobilkommunikationssystem, wobei die Chipkarte (500) Folgendes umfasst:
einen Mikroprozessor zum Empfangen (405) TBK-bezogener Informationen, die zum Verschlüsseln eines Chiffrierschlüssels mindestens eines Dienstes verwendet werden, von einem ersten Endgerät, das den mindestens einen Dienst gebucht hat, zum Empfangen (409, 413, 509) einer Anforderungsmitteilung zum Erlangen der TBK-bezogenen Informationen von einem zweiten Endgerät und zum Senden (411, 415, 511) der gespeicherten TBK-bezogenen Informationen zum zweiten Endgerät über eine Antwortmitteilung auf die Anforderungsmeldung und
einen Speicher zum Speichern (407) der TBK-bezogenen Informationen,
wobei die Antwortmitteilung die TBK-bezogenen Informationen beinhaltet, die einem Dienst, den das zweite Endgerät wiederzugeben beabsichtigt, aus dem mindestens einen gebuchten Dienst entsprechen, durch Erlangen der TBK-Informationen abhängig von der Antwortmitteilung und dem TBK durch Durchführen eines Authentifikationsprozesses unter Verwendung der TBK-bezogenen Informationen.

31. Chipkarte nach Anspruch 30, wobei die TBK-bezogenen Informationen mindestens eines von einem Identifikator, ID, des mindestens einen gebuchten Dienstes, einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

32. Chipkarte nach Anspruch 31, wobei der Mikroprozessor eine Anforderung für den ID des mindestens einen gebuchten Dienstes vom zweiten Endgerät empfängt (409) und den ID des mindestens einen gebuchten Dienstes zum zweiten Endgerät sendet, die Anforderungsmitteilung, die einen ID des Dienstes beinhaltet, den das zweite Endgerät auswählt und wiederzugeben beabsichtigt, aus dem ID des mindestens einen gebuchten Dienstes empfängt (413) und die Antwortmitteilung sendet (415), in der ein TBK-ID und eine URL beinhaltet sind, die dem ausgewählten ID entsprechen.

33. Chipkarte nach Anspruch 31, wobei der Mikroprozessor einen ID des mindestens einen gebuchten Dienstes und einen TBK-ID und eine URL des mindestens einen gebuchten Dienstes über die Antwortmitteilung sendet (511) und
wobei das zweite Endgerät einen ID des Dienstes, den das zweite Endgerät wiederzugeben beabsichtigt, aus dem ID des mindestens einen gebuchten Dienstes auswählt und einen TBK-ID und eine URL erlangt, die dem ausgewählten ID entspricht.

34. Chipkarte zum Erlangen eines Endgeräte-Bindungsschlüssels, Terminal Binding Keys, TBKs, zur Verwendung in einem Mobilkommunikationssystem, wobei die Chipkarte (500) Folgendes umfasst:
einen Mikroprozessor zum Empfangen (703) von Erlangungsinformationen zum Erlangen einer Dienstanleitung und zum Empfangen eines Identifikators, IDs, mindestens eines Dienstes von einem ersten Endgerät, das den mindestens einen Dienst gebucht hat; zum Senden (709) der Erlangungsinformationen zum Erlangen der Dienstanleitung von der Chipkarte in Reaktion auf eine erste Anforderungsmitteilung zum Erlangen der Erlangungsinformationen von einem zweiten Endgerät; zum Senden (717) des IDs des mindestens einen gebuchten Dienstes von der Chipkarte in Reaktion auf Empfang einer zweiten Anforderungsmitteilung zum Erlangen des IDs des mindestens einen gebuchten Dienstes vom zweiten Endgerät und
einen Speicher zum Speichern der Erlangungsinformationen und des IDs des mindestens einen Dienstes, wobei der ID des mindestens einen gebuchten Dienstes in TBK-Informationen in der Dienstanleitung beinhaltet ist, die basierend auf den Erlangungsinformationen erlangbar ist, und durch das zweite Endgerät zum Erlangen der TBK-Informationen, die zur TBK-Erlangung notwendig sind, unter Verwendung des IDs des mindestens einen gebuchten Dienstes von der Dienstanleitung, die basierend auf den Erlangungsinformationen erlangt wird, und zum Erlangen des TBK durch Durchführen eines Authentifikationsprozesses unter Verwendung der TBK-Informationen verwendet wird.

35. Chipkarte nach Anspruch 34, wobei die TBK-Informationen mindestens eines von einem TBK-ID für den mindestens einen gebuchten Dienst und einer Internetadresse, Uniform Resource Locator, URL, für den mindestens einen gebuchten Dienst umfassen, von der der TBK ausgegeben werden kann, der dem entsprechenden gebuchten Dienst entspricht.

36. Chipkarte nach Anspruch 34, wobei die Erlangungsinformationen eine URL, von der die Dienstanleitung erlangt werden kann, und einen Fragment-ID der Dienstanleitung umfassen.

## Revendications

1. Procédé d'acquisition d'une clé de liaison de terminaux, TBK, pour une utilisation dans un système de communication mobile, le procédé comprenant :
l'envoi (309), par un deuxième terminal, d'un message de demande pour l'acquisition d'informations TBK à une carte à puce ;
la réception (311), par le deuxième terminal, d'un guide de services et d'un identifiant, ID, d'au moins un service abonné en provenance de la carte à puce par l'intermédiaire d'un message de réponse au message de demande, dans lequel le guide de services et l'ID de l'au moins un service abonné sont envoyés d'un premier terminal abonné à l'au moins un service et sont mémorisés dans la carte à puce ; et
l'acquisition (313), par le deuxième terminal, d'informations TBK correspondant à un service que le deuxième terminal a l'intention de lire parmi l'au moins un service abonné, à partir du guide de services en fonction de l'ID de l'au moins un service abonné, inclus dans le message de réponse, et l'acquisition (319) de la TBK par l'exécution d'un processus d'authentification en utilisant les informations TBK acquises.

2. Procédé selon la revendication 1, dans lequel les informations TBK comprennent au moins l'un d'un ID TBK pour l'au moins un service abonné, et d'un localisateur de ressource uniforme, URL, pour l'au moins un service abonné à partir duquel la TBK correspondant au service abonné correspondant peut être émise.

3. Procédé d'acquisition d'une clé de liaison de terminaux, TBK, pour une utilisation dans un système de communication mobile, le procédé comprenant :
l'envoi (409, 509), par un deuxième terminal, d'un message de demande pour l'acquisition d'informations relatives à TBK utilisées pour le cryptage d'une clé de cryptage d'au moins un service abonné à une carte à puce, dans lequel les informations relatives à TBK sont envoyées d'un premier terminal abonné à l'au moins un service et sont mémorisées dans la carte à puce ;
la réception (411, 511), par le deuxième terminal, des informations relatives à TBK en provenance de la carte à puce par l'intermédiaire d'un message de réponse au message de demande ; et
l'acquisition (413, 415, 513), par le deuxième terminal, d'informations relatives à TBK correspondant à un service que le deuxième terminal a l'intention de lire parmi l'au moins un service abonné, en fonction du message de réponse, et l'acquisition de la TBK (421, 519) par l'exécution d'un processus d'authentification en utilisant les informations relatives à TBK.

4. Procédé selon la revendication 3, dans lequel les informations relatives à TBK comprennent au moins l'un d'un identifiant, ID, de l'au moins un service abonné, d'un ID TBK pour l'au moins un service abonné et d'un localisateur de ressource uniforme, URL, pour l'au moins un service abonné à partir duquel la TBK correspondant au service abonné correspondant peut être émise.

5. Procédé selon la revendication 4, dans lequel l'acquisition des informations relatives à TBK comprend :
l'identification de l'ID de l'au moins un service abonné sur la base des informations relatives à TBK ; et
la sélection d'un ID du service que le deuxième terminal a l'intention de lire, parmi l'ID de l'au moins un service abonné, l'envoi (413) du message de demande comprenant l'ID sélectionné à la carte à puce, et la réception (415) du message de réponse dans lequel un ID TBK et un URL correspondant à l'ID sélectionné sont inclus.

6. Procédé selon la revendication 4, dans lequel l'acquisition des informations relatives à TBK comprend :
l'identification de l'ID de l'au moins un service abonné, ainsi que de l'ID TBK et de l'URL sur la base des informations relatives à TBK ; et
la sélection d'un ID du service que le deuxième terminal a l'intention de lire, parmi l'ID de l'au moins un service abonné, et l'acquisition (513) d'un ID TBK et d'un URL correspondant à l'ID sélectionné.

7. Procédé d'acquisition d'une clé de liaison de terminaux, TBK, pour une utilisation dans un système de communication mobile, le procédé comprenant :
l'envoi (707), par un deuxième terminal, d'un premier message de demande pour la demande d'informations d'acquisition pour l'acquisition d'un guide de services dans lequel des informations TBK sont incluses, à une carte à puce ;
la réception (709) des informations d'acquisition en provenance de la carte à puce pour l'acquisition du guide de services ;
l'envoi (711), par le deuxième terminal, d'un deuxième message de demande pour la demande du guide de services sur la base des informations d'acquisition pour l'acquisition du guide de services, à une distribution/adaptation de services de diffusion, BSD/A, et la réception (713) du guide de services demandé sur la base des informations d'acquisition en provenance de la BSD/A, dans lequel les informations d'acquisition sont envoyées d'un premier terminal abonné à l'au moins un service avec l'ID de l'au moins un service abonné à une carte à puce et sont mémorisées avec l'ID de l'au moins un service abonné dans la carte à puce ;
la réception (717), par le deuxième terminal, de l'ID de l'au moins un service abonné en provenance de la carte à puce par l'envoi d'un troisième message de demande pour l'acquisition de l'ID de l'au moins un service abonné à la carte à puce ; et
l'acquisition (719), par le deuxième terminal, d'informations TBK nécessaires pour l'acquisition de la TBK en utilisant l'ID de l'au moins un service abonné à partir du guide de services reçu sur la base des informations d'acquisition, et l'acquisition (725) de la TBK par l'exécution d'un processus d'authentification en utilisant les informations TBK.

8. Procédé selon la revendication 7, dans lequel les informations TBK comprennent au moins l'un d'un ID TBK pour l'au moins un service abonné, et d'un localisateur de ressource uniforme, URL, pour l'au moins un service abonné à partir duquel la TBK correspondant au service abonné correspondant peut être émise.

9. Procédé selon la revendication 7, dans lequel les informations d'acquisition comprennent un URL à partir duquel le guide de services peut être acquis, et un ID de fragment du guide de services.

10. Procédé d'acquisition d'une clé de liaison de terminaux, TBK, pour une utilisation dans un système de communication mobile, le procédé comprenant :
la réception (305), par une carte à puce, d'un guide de services et d'un identifiant, ID, d'au moins un service en provenance d'un premier terminal abonné à l'au moins un service ;
la mémorisation (307), par la carte à puce, du guide de services et de l'ID de l'au moins un service abonné ;
la réception (309), par la carte à puce, d'un message de demande pour l'acquisition d'informations TBK en provenance d'un deuxième terminal ; et
l'envoi (311), par la carte à puce, du guide de services et de l'ID de l'au moins un service au deuxième terminal par l'intermédiaire d'un message de réponse au message de demande,
dans lequel le message de réponse comprend des informations TBK correspondant à un service que le deuxième terminal a l'intention de lire parmi l'au moins un service abonné, et le deuxième terminal acquiert les informations TBK à partir du guide de services en fonction de l'ID de l'au moins un service abonné et de la TBK par l'exécution d'un processus d'authentification en utilisant les informations TBK acquises.

11. Procédé selon la revendication 10, dans lequel les informations TBK comprennent au moins l'un d'un ID TBK pour l'au moins un service abonné, et d'un localisateur de ressource uniforme, URL, pour l'au moins un service abonné à partir duquel la TBK correspondant au service abonné correspondant peut être émise.

12. Procédé d'acquisition d'une clé de liaison de terminaux, TBK, pour une utilisation dans un système de communication mobile, le procédé comprenant :
la réception (405), par une carte à puce, d'informations relatives à TBK utilisées pour le cryptage d'une clé de cryptage d'au moins un service abonné en provenance d'un premier terminal abonné à au moins un service ;
la mémorisation (407), par la carte à puce, des informations relatives à TBK ; et
la réception (409, 413, 509), par la carte à puce, d'un message de demande pour l'acquisition des informations relatives à TBK en provenance d'un deuxième terminal et l'envoi (411, 415, 511), par la carte à puce, des informations relatives à TBK mémorisées au deuxième terminal par l'intermédiaire d'un message de réponse au message de demande,
dans lequel le message de réponse comprend les informations relatives à TBK correspondant à un service que le deuxième terminal a l'intention de lire parmi l'au moins un service abonné, et le deuxième terminal acquiert les informations TBK en fonction du message de réponse et la TBK par l'exécution d'un processus d'authentification en utilisant les informations relatives à TBK.

13. Procédé selon la revendication 12, dans lequel les informations relatives à TBK comprennent au moins l'un d'un identifiant, ID, de l'au moins un service abonné, d'un ID TBK pour l'au moins un service abonné et d'un localisateur de ressource uniforme, URL, pour l'au moins un service abonné à partir duquel la TBK correspondant au service abonné correspondant peut être émise.

14. Procédé selon la revendication 13, dans lequel la réception du message de demande pour l'acquisition des informations relatives à TBK et l'envoi des informations relatives à TBK mémorisées comprend :
la réception (409), par la carte à puce, d'une demande de l'ID de l'au moins un service abonné en provenance du deuxième terminal, et l'envoi (411) de l'ID de l'au moins un service abonné au deuxième terminal ; et
la réception (413), par la carte à puce, du message de demande comprenant un ID du service que le deuxième terminal sélectionne et a l'intention de lire, parmi l'ID de l'au moins un service abonné, et l'envoi (415) du message de réponse dans lequel un ID TBK et un URL correspondant à l'ID sélectionné sont inclus.

15. Procédé selon la revendication 13, dans lequel l'envoi des informations relatives à TBK mémorisées comprend :
l'envoi (511), par la carte à puce, d'un ID de l'au moins un service abonné, ainsi que d'un ID TBK et d'un URL de l'au moins un service abonné par l'intermédiaire du message de réponse,
dans lequel le deuxième terminal sélectionne un ID du service que le deuxième terminal a l'intention de lire, parmi l'ID de l'au moins un service abonné, et l'acquisition (513) d'un ID TBK et d'un URL correspondant à l'ID sélectionné.

16. Procédé d'acquisition d'une clé de liaison de terminaux, TBK, pour une utilisation dans un système de communication mobile, le procédé comprenant :
la réception (703), par une carte à puce, d'informations d'acquisition pour l'acquisition d'un guide de services dans lequel des informations TBK sont incluses et la réception, par la carte à puce, d'un identifiant, ID, d'au moins un service abonné en provenance d'un premier terminal abonné à l'au moins un service ;
la mémorisation, par la carte à puce, des informations d'acquisition et de l'ID de l'au moins un service abonné ; et
l'envoi (709), par la carte à puce, des informations d'acquisition en réponse à une réception d'une première demande d'acquisition des informations d'acquisition en provenance d'un deuxième terminal ;
l'envoi (717), par la carte à puce, de l'ID de l'au moins un service abonné à partir de la carte à puce en réponse à la réception d'un deuxième message de demande d'acquisition de l'ID de l'au moins un service abonné à partir du deuxième terminal,
dans lequel le deuxième terminal acquiert des informations TBK nécessaires pour l'acquisition de la TBK en utilisant l'ID de l'au moins un service abonné à partir du guide de services sur la base des informations d'acquisition, et acquiert la TBK par l'exécution d'un processus d'authentification en utilisant les informations TBK.

17. Procédé selon la revendication 16, dans lequel les informations TBK comprennent au moins l'un d'un ID TBK pour l'au moins un service abonné, et d'un localisateur de ressource uniforme, URL, pour l'au moins un service abonné à partir duquel la TBK correspondant au service abonné correspondant peut être émise.

18. Procédé selon la revendication 16, dans lequel les informations d'acquisition comprennent un URL à partir duquel le guide de services peut être acquis, et un ID de fragment du guide de services.

19. Terminal d'acquisition d'une clé de liaison de terminaux, TBK, pour une utilisation dans un système de communication mobile, le terminal (400) comprenant :
un émetteur-récepteur pour l'envoi (309) d'un message de demande pour l'acquisition d'informations TBK à une carte à puce, et la réception (311) d'un guide de services et d'un identifiant, ID, d'au moins un service abonné en provenance de la carte à puce par l'intermédiaire d'un message de réponse au message de demande, dans lequel le guide de services et l'ID d'au moins un service sont envoyés d'un autre terminal abonné à l'au moins un service et sont mémorisés dans la carte à puce ; et
un organe de commande pour l'acquisition (313) d'informations TBK correspondant à un service que le deuxième terminal a l'intention de lire parmi l'au moins un service abonné, à partir du guide de services en fonction de l'ID de l'au moins un service abonné, inclus dans le message de réponse, et l'acquisition (319) de la TBK par l'exécution d'un processus d'authentification en utilisant les informations TBK acquises.

20. Terminal selon la revendication 19, dans lequel les informations TBK comprennent au moins l'un d'un ID TBK pour l'au moins un service abonné, et d'un localisateur de ressource uniforme, URL, pour l'au moins un service abonné à partir duquel la TBK correspondant au service abonné correspondant peut être émise.

21. Terminal d'acquisition d'une clé de liaison de terminaux, TBK, pour une utilisation dans un système de communication mobile, le terminal comprenant :
un émetteur-récepteur pour l'envoi (409, 509) d'un message de demande pour l'acquisition d'informations relatives à TBK utilisées pour le cryptage d'une clé de cryptage d'au moins un service abonné à une carte à puce, dans lequel les informations relatives à TBK sont envoyées d'un autre terminal abonné à l'au moins un service et sont mémorisées dans la carte à puce, et la réception (411, 511) des informations relatives à TBK en provenance de la carte à puce par l'intermédiaire d'un message de réponse au message de demande ; et
un organe de commande pour l'acquisition (413, 415, 513) d'informations relatives à TBK correspondant à un service que le terminal a l'intention de lire parmi l'au moins un service abonné, en fonction du message de réponse, et l'acquisition de la TBK (421, 519) par l'exécution d'un processus d'authentification en utilisant les informations relatives à TBK.

22. Terminal selon la revendication 21, dans lequel les informations relatives à TBK comprennent au moins l'un d'un identifiant, ID, de l'au moins un service abonné, d'un ID TBK pour l'au moins un service abonné et d'un localisateur de ressource uniforme, URL, pour l'au moins un service abonné à partir duquel la TBK correspondant au service abonné correspondant peut être émise.

23. Terminal selon la revendication 22, dans lequel le terminal effectue l'identification de l'ID de l'au moins un service abonné sur la base des informations relatives à TBK, la sélection d'un ID du service que le deuxième terminal a l'intention de lire, parmi l'ID de l'au moins un service abonné, l'envoi (413) du message de demande comprenant l'ID sélectionné à la carte à puce, et la réception (415) du message de réponse dans lequel un ID TBK et un URL correspondant à l'ID sélectionné sont inclus.

24. Terminal selon la revendication 22, dans lequel le terminal effectue l'identification de l'ID de l'au moins un service abonné, ainsi que de l'ID TBK et de l'URL sur la base des informations relatives à TBK, la sélection d'un ID du service que le deuxième terminal a l'intention de lire, parmi l'ID de l'au moins un service abonné, et l'acquisition (513) d'un ID TBK et d'un URL correspondant à l'ID sélectionné.

25. Terminal d'acquisition d'une clé de liaison de terminaux, TBK, pour une utilisation dans un système de communication mobile, le terminal comprenant :
un émetteur-récepteur pour l'envoi (707) d'un premier message de demande pour la demande d'informations d'acquisition pour l'acquisition d'un guide de services dans lequel des informations TBK sont incluses, à une carte à puce, la réception (709) des informations d'acquisition en provenance de la carte à puce ;
un émetteur-récepteur pour l'envoi (711) d'un deuxième message de demande pour la demande du guide de services sur la base des informations d'acquisition pour l'acquisition du guide de services, à une distribution/adaptation de services de diffusion, BSD/A, la réception (713) du guide de services demandé sur la base des informations d'acquisition en provenance de la BSD/A, dans lequel les informations d'acquisition sont envoyées d'un autre terminal abonné à l'au moins un service et mémorisées avec l'ID de l'au moins un service abonné dans la carte à puce, et la réception (717) de l'ID de l'au moins un service abonné en provenance de la carte à puce par l'envoi d'un troisième message de demande pour l'acquisition de l'ID de l'au moins un service abonné à la carte à puce ; et
un organe de commande pour l'acquisition (719) d'informations TBK nécessaires pour l'acquisition de la TBK en utilisant l'ID de l'au moins un service abonné à partir du guide de services reçu sur la base des informations d'acquisition, et l'acquisition (725) de la TBK par l'exécution d'un processus d'authentification en utilisant les informations TBK.

26. Terminal selon la revendication 25, dans lequel les informations TBK comprennent au moins l'un d'un ID TBK pour l'au moins un service abonné, et d'un localisateur de ressource uniforme, URL, pour l'au moins un service abonné à partir duquel la TBK correspondant au service abonné correspondant peut être émise.

27. Terminal selon la revendication 25, dans lequel les informations d'acquisition comprennent un URL à partir duquel le guide de services peut être acquis, et un ID de fragment du guide de services.

28. Carte à puce d'acquisition d'une clé de liaison de terminaux, TBK, pour une utilisation dans un système de communication mobile, la carte à puce (500) comprenant :
un microprocesseur pour la réception (305) d'un guide de services et d'un identifiant, ID, d'au moins un service en provenance d'un premier terminal abonné à l'au moins un service, la réception (309) d'un message de demande pour l'acquisition d'informations TBK en provenance d'un deuxième terminal, et l'envoi (311) du guide de services et de l'ID de l'au moins un service au deuxième terminal par l'intermédiaire d'un message de réponse au message de demande ; et
une mémoire pour la mémorisation (307) du guide de services et de l'ID de l'au moins un service abonné,
dans laquelle le guide de services comprend des informations TBK, dans laquelle les informations TBK comprennent l'ID de l'au moins un service abonné, et
dans laquelle le message de réponse comprend des informations TBK correspondant à un service que le deuxième terminal a l'intention de lire parmi l'au moins un service abonné, par l'acquisition des informations TBK à partir du guide de services en fonction de l'ID de l'au moins un service abonné et de la TBK par l'exécution d'un processus d'authentification en utilisant les informations TBK acquises.

29. Carte à puce selon la revendication 28, dans laquelle les informations TBK comprennent au moins l'un d'un ID TBK pour l'au moins un service abonné, et d'un localisateur de ressource uniforme, URL, pour l'au moins un service abonné à partir duquel la TBK correspondant au service abonné correspondant peut être émise.

30. Carte à puce d'acquisition d'une clé de liaison de terminaux, TBK, pour une utilisation dans un système de communication mobile, la carte à puce (500) comprenant :
un microprocesseur pour la réception (405) d'informations relatives à TBK utilisées pour le cryptage d'une clé de cryptage d'au moins un service abonné en provenance d'un premier terminal abonné à l'au moins un service, la réception (409, 413, 509) d'un message de demande pour l'acquisition des informations relatives à TBK en provenance d'un deuxième terminal, et l'envoi (411, 415, 511) des informations relatives à TBK mémorisées au deuxième terminal par l'intermédiaire d'un message de réponse au message de demande ; et
une mémoire pour la mémorisation (407) des informations relatives à TBK,
dans laquelle le message de réponse comprend les informations relatives à TBK correspondant à un service que le deuxième terminal a l'intention de lire parmi l'au moins un service abonné, par l'acquisition des informations TBK en fonction du message de réponse et la TBK par l'exécution d'un processus d'authentification en utilisant les informations relatives à TBK.

31. Carte à puce selon la revendication 30, dans laquelle les informations relatives à TBK comprennent au moins l'un d'un identifiant, ID, de l'au moins un service abonné, d'un ID TBK pour l'au moins un service abonné et d'un localisateur de ressource uniforme, URL, pour l'au moins un service abonné à partir duquel la TBK correspondant au service abonné correspondant peut être émise.

32. Carte à puce selon la revendication 31, dans laquelle le microprocesseur effectue la réception (409) d'une demande de l'ID de l'au moins un service abonné en provenance du deuxième terminal, et l'envoi (411) de l'ID de l'au moins un service abonné au deuxième terminal, la réception (413) du message de demande comprenant un ID du service que le deuxième terminal sélectionne et a l'intention de lire, parmi l'ID de l'au moins un service abonné, et l'envoi (415) du message de réponse dans lequel un ID TBK et un URL correspondant à l'ID sélectionné sont inclus.

33. Carte à puce selon la revendication 31, dans laquelle le microprocesseur effectue l'envoi (511) d'un ID de l'au moins un service abonné, ainsi que d'un ID TBK et d'un URL de l'au moins un service abonné par l'intermédiaire du message de réponse, et
dans laquelle le deuxième terminal sélectionne un ID du service que le deuxième terminal a l'intention de lire, parmi l'ID de l'au moins un service abonné, et l'acquisition d'un ID TBK et d'un URL correspondant à l'ID sélectionné.

34. Carte à puce d'acquisition d'une clé de liaison de terminaux, TBK, pour une utilisation dans un système de communication mobile, la carte à puce (500) comprenant :
un microprocesseur pour la réception (703) d'informations d'acquisition pour l'acquisition d'un guide de services et la réception d'un identifiant, ID, d'au moins un service en provenance d'un premier terminal abonné à l'au moins un service ; l'envoi (709) des informations d'acquisition pour l'acquisition du guide de services à partir de la carte à puce en réponse à un premier message de demande d'acquisition des informations d'acquisition en provenance d'un deuxième terminal ; et l'envoi (717) de l'ID de l'au moins un service abonné à partir de la carte à puce en réponse à la réception d'un deuxième message de demande d'acquisition de l'ID de l'au moins un service abonné à partir du deuxième terminal ; et
une mémoire pour la mémorisation des informations d'acquisition et de l'ID de l'au moins un service,
dans laquelle l'ID de l'au moins un service abonné est inclus dans des informations TBK dans le guide de services dont l'acquisition peut être effectuée sur la base des informations d'acquisition, et utilisé, par le deuxième terminal, pour l'acquisition des informations TBK nécessaires pour l'acquisition de la TBK en utilisant l'ID de l'au moins un service abonné à partir du guide de services acquis sur la base des informations d'acquisition, et pour l'acquisition de la TBK par l'exécution d'un processus d'authentification en utilisant les informations TBK.

35. Carte à puce selon la revendication 34, dans laquelle les informations TBK comprennent au moins l'un d'un ID TBK pour l'au moins un service abonné, et d'un localisateur de ressource uniforme, URL, pour l'au moins un service abonné à partir duquel la TBK correspondant au service abonné correspondant peut être émise.

36. Carte à puce selon la revendication 34, dans laquelle les informations d'acquisition comprennent un URL à partir duquel le guide de services peut être acquis, et un ID de fragment du guide de services.
